# EUROPÄISCHE PATENTSCHRIFT

(11) **EP 4 046 845 B1**
(45) Veröffentlichungstag und Bekanntmachung des Hinweises auf die Patenterteilung: **14.05.2025**
(21) Anmeldenummer: 22154705.2
(22) Anmeldetag: 02.02.2022
(51) Int. Cl.: B60K 17/16, B60K 17/30, B60K 1/00, B62D 7/00

(54) **ANTRIEBSSTRANG FÜR EIN KRAFTFAHRZEUG**
DRIVE TRAIN FOR A MOTOR VEHICLE
GROUPE MOTOPROPULSEUR POUR VÉHICULE

(30) Priorität: 18.02.2021 DE 102021201547
(43) Veröffentlichungstag der Anmeldung: 24.08.2022
(73) Patentinhaber: VOLKSWAGEN AG, 38440 Wolfsburg (DE)
(72) Erfinder: Müller, Frank, 38165 Essenrode (DE)

(56) Entgegenhaltungen:
- EP-A1- 3 357 727
- WO-A1-2016/184607
- WO-A1-2019/062864
- US-A1- 2019 222 095

## Beschreibung

Die Erfindung betrifft ein Kraftfahrzeug mit einem Antriebsstrang gemäß den Merkmalen des Oberbegriffes des Patentanspruches 1.

Im Stand der Technik sind Antriebsstränge für Kraftfahrzeuge mit einem Antriebsaggregat, einem Lenkgetriebe, einer Lenkwelle, einer ersten und einer zweiten Gelenkwelle bekannt. Das entsprechende Antriebsaggregat weist eine Elektromaschine, eine Getriebeeinheit und einen Pulswechselrichter auf, wobei die Elektromaschine und der Pulswechselrichter auf zwei gegenüberliegenden Seiten der Getriebeeinheit angeordnet sind. Eine Antriebswelle der Elektromaschine und eine Getriebewelle der Getriebeeinheit verlaufen im Wesentlichen horizontal und im Wesentlichen senkrecht zu einer Fahrtrichtung des Kraftfahrzeugs. Aus Gründen der Fahrdynamik ist das Lenkgetriebe in Fahrtrichtung (Vorwärts-Fahrtrichtung) vor dem Antriebsaggregat angeordnet. Damit ist gemeint, dass vom Kraftfahrzeug von vorne nach hinten aus gesehen zuerst das Lenkgetriebe und dahinter dann das Antriebsaggregat angeordnet ist. Mittels der Lenkwelle ist das Lenkgetriebe mit einem Lenkrad des Kraftfahrzeugs funktional wirksam verbindbar. Deswegen ist die Lenkwelle seitlich neben dem Antriebsaggregat angeordnet. Die Getriebeeinheit weist weiterhin ein Differential auf, wobei das Differential mittels der ersten Gelenkwelle mit einem ersten Vorderrad des Kraftfahrzeuges wirksam verbindbar ist. Das Differential ist des Weiteren mittels der zweiten Gelenkwelle mit einem zweiten Vorderrad des Kraftfahrzeuges wirksam verbindbar.

Die US 2019 / 0222095 A1 zeigt ein modulares Antriebssystem. Eine erste Elektromaschine ist dazu über ein erstes Getriebe mit einem Differential gekoppelt. Die erste Elektromaschine ist mit einer zweiten Elektromaschine zu einer Doppelantriebseinheit koppelbar. Mittels eines ersten Pulswechselrichters wird der Betrieb der ersten Elektromaschine gesteuert. Der erste Pulswechselrichter ist auf eine erste Motorachse ausgerichtet und auf der der ersten Elektromaschine gegenüberliegenden Seite des ersten Getriebes angeordnet. Mittels eines zweiten Pulswechselrichters wird der Betrieb der zweiten Elektromaschine gesteuert. Der zweite Pulswechselrichter ist auf eine zweite Motorachse ausgerichtet und auf der der zweiten Elektromaschine gegenüberliegenden Seite eines der zweiten Elektromaschine zugeordneten, zweiten Getriebes angeordnet. Die Getriebeeinheit weist somit das erste Getriebe, das zweite Getriebe und unter Umständen das Differential auf. Die erste und die zweite Elektromaschine sind auf zwei einander gegenüberliegenden Seiten der Getriebeeinheit angeordnet. Kühlmittelzuläufe und Kühlmittelablaufe der beiden Elektromaschinen sind miteinander verbindbar, insbesondere mittels von in der Getriebeeinheit ausgebildeten Kühlmittelkanälen.

In der EP 3 357 727 A1 ist ein Antriebsstrang für ein Kraftfahrzeug mit einem Antriebsaggregat offenbart. Das Antriebsaggregat umfasst: einen Pulswechselrichter, der konfiguriert ist, um extern bereitgestellten Gleichstrom in Wechselstrom umzuwandeln; eine Elektromaschine, die konfiguriert ist, um die Leistung von dem Pulswechselrichter in mechanische Rotation einer Antriebswelle der Elektromaschine umzuwandeln; und eine Getriebeeinheit. Die Elektromaschine, die Getriebeeinheit und der Pulswechselrichter sind jeweils in einem separaten Teilgehäuse, nämlich einem Elektromaschinenteilgehäuse, einem Getriebeteilgehäuse und einem Pulswechselrichterteilgehäuse angeordnet. Die Elektromaschine, die Getriebeeinheit und der Pulswechselrichter sind abnehmbar und in axialer Richtung entlang einer Getriebewelle der Getriebeeinheit mit der Getriebeeinheit verbunden, wobei die Getriebeeinheit zwischen der Elektromaschine und dem Pulswechselrichter positioniert ist. In dem Getriebeteilgehäuse ist eine Trennplatte vorgesehen, um das Innere des Getriebeteilgehäuses in einen Getriebehohlraum und einen Trockenhohlraum zu unterteilen. Der Trockenhohlraum dient dem Einführen von elektrischen Verbindungsleitungen der Elektromaschine und des Pulswechselrichters. Der Trockenhohlraum weist mehrere Kontakte zum Andocken der elektrischen Verbindungsleitungen der Elektromaschine und des Pulswechselrichters auf.

Die US 9,692,277 B2 offenbart einen weiteren Antriebsstrang mit einem Antriebsaggregat. Das Antriebsaggregat weist eine Elektromaschine, einen Pulswechselrichter und eine Getriebeeinheit auf. Das Antriebsaggregat weist ein mehrteiliges Antriebsaggregatgehäuse auf. Vornehmlich erfolgt der Einsatz des Antriebsaggregats an der Hinterachse eines Kraftfahrzeugs. Ein Einsatz an einer Vorderachse ist ebenfalls denkbar. Die Elektromaschine, die Getriebeeinheit und der Pulswechselrichter sind in dieser Reihenfolge in axialer Richtung einer Getriebewelle nebeneinander angeordnet. Das Antriebsaggregat ist an einer Hilfsrahmenstruktur eines Fahrgestells mit einem Paar Halterungen an zwei Punkten montiert. Mit einer jeden dieser Halterungen ist ein Befestigungspunkt ausgebildet. Eine jede Halterung weist eine Gummibuchse (oder synthetische Buchse) auf, und ist mit jeweils einer Schraube an der Hilfsrahmenstruktur befestigbar. Ein thermisches Management-System dient der Kontrolle der Temperatur von Elektromaschine, Pulswechselrichter und Getriebeeinheit. Ein Kühlmittelzulauf zur Zufuhr und ein Kühlmittelablauf zur Abfuhr eines Kühlfluids sind an einander gegenüberliegenden Stirnseiten des Antriebsaggregats angeordnet.

So wird in der WO 2016/184607 A1 ein Kraftfahrzeug mit einem Antriebsstrang offenbart, wobei der Antriebsstrang ein Antriebsaggregat, ein Lenkgetriebe, eine Lenkwelle sowie eine erste und eine zweite Gelenkwelle aufweist. Das Antriebsaggregat ist als eine Elektromaschine ausgebildet und die Elektromaschine weist eine Antriebswelle und die Getriebeeinheit eine Getriebewelle auf. Die Antriebswelle und die Getriebewelle verlaufen im Wesentlichen horizontal und im Wesentlichen senkrecht zur Fahrtrichtung des Kraftfahrzeugs, wobei das Lenkgetriebe in Fahrtrichtung vor dem Antriebsaggregat angeordnet ist. Die Getriebeeinheit weist ein Differential auf, wobei die erste und zweite Gelenkwelle jeweils mit einem jeweiligen Rad des Kraftfahrzuges wirksam verbindbar sind.

Schließlich ist in der WO 2019/062864 A1 ein Antriebsstrang für ein Kraftfahrzeug offenbart, wobei das Antriebsaggregat eine Elektromaschine umfasst und die Getriebeeinheit ein Differential aufweist. Über eine erste und zweite Gelenkwelle des Differentials ist das Antriebsmoment auf die jeweiligen Vorderräder des Kraftfahrzeugs übertragbar.

Bei den bekannten Antriebssträngen ergeben sich Probleme bei der Integration des Antriebsaggregates in das Kraftfahrzeug. Der zur Verfügung stehende Bauraum im Kraftfahrzeug wird nämlich nicht optimal genutzt, letzteres insbesondere in Abhängigkeit davon, ob das Antriebsaggregat in einem Linkslenkerfahrzeug oder in einem Rechtslenkerfahrzeug angeordnet wird. So entstehen bei Einsatz der bekannten Antriebsstränge jeweils ungenutzte Bereiche im Bauraum. Teilweise müssen sogar an das Antriebsaggregat angrenzende Bauteile des Antriebsstranges dann versetzt angeordnet werden, was sich negativ auf die Effizienz bzw. den Wirkungsgrad des Antriebsstranges und somit des Kraftfahrzeugs auswirkt. Weiterhin sind die bekannten Antriebsstränge nur mit entsprechenden konstruktiven Anpassungen in unterschiedlichen Fahrzeugvarianten (Linkslenkerfahrzeug / Rechtslenkerfahrzeug) einsetzbar, was den Entwicklungsaufwand, den Herstellungsaufwand und den Montageaufwand der Antriebsstränge erhöht.

Der Erfindung liegt daher die Aufgabe zugrunde, den Antriebsstrang für ein Kraftfahrzeug nun derart auszugestalten und weiterzubilden, dass der Entwicklungsaufwand, der Herstellungsaufwand und/oder der Montageaufwand bzw. die damit verbundenen Kosten verringert sind und/oder dass der zur Verfügung stehende Bauraum, insbesondere auch unter Berücksichtigung der Anordnung einer Elektromaschine und/oder deren Leistung, möglichst optimal ausnutzbar ist.

Diese der Erfindung zugrundeliegende Aufgabe wird nun für ein Kraftfahrzeug mit den Merkmalen des Patentanspruchs 1 gelöst.

Das Grundprinzip der Erfindung liegt zunächst im Wesentlichen nun darin, dass das Differential im Wesentlichen mittig auf einer im Kraftfahrzeug mittig verlaufenden Längsachse des Kraftfahrzeugs angeordnet ist, wobei eine Länge der ersten Gelenkwelle einer Länge der zweiten Gelenkwelle im Wesentlichen entspricht. Hierbei ist das Antriebsaggregat weiterhin so ausgebildet, dass das Antriebsaggregat sowohl in einem Rechtslenkerfahrzeug wie auch in einem Linkslenkerfahrzeug anordnenbar ist, wobei die Anordnung des Antriebsaggregats im Rechtslenkerfahrzeug gegenüber der Anordnung des Antriebsaggregats im Linkslenkerfahrzeug um 180° zu einer vertikalen Hochachse gedreht ausgeführt ist. Wenn das Antriebsaggregat in dem Rechtslenkerfahrzeug angeordnet ist, dann ist die Lenkwelle in Bezug zur Fahrtrichtung rechts neben dem Antriebsaggregat angeordnet. Wenn das Antriebsaggregat demgegenüber in dem Linkslenkerfahrzeug angeordnet ist, dann ist die Lenkwelle in Bezug zur Fahrtrichtung links neben dem Antriebsaggregat angeordnet. Die vertikale Hochachse verläuft hierbei insbesondere genau mittig im Kraftfahrzeug und kreuzt die insbesondere genau mittig verlaufende Längsachse des Kraftfahrzeuges.

Die im Wesentlichen mittige Anordnung des Differentials ermöglicht die Ausbildung der im Wesentlichen gleichlangen Gelenkwellen. Mit dem Ausdruck "im Wesentlichen mittig" in Bezug zum Differential ist hier nun gemeint, dass das Differrential bis zu ± 50mm außermittig in Bezug zu dem Mittelpunkt einer Querachse des Kraftfahrzeugs bzw. bis zu ± 50mm außermittig in Bezug zu einer genau mittig verlaufenden Längsachse des Kraftfahrzeuges anordnenbar ist. Mit dem Ausdruck "im Wesentlichen" in Bezug zu den Gelenkwellen ist hier gemeint, dass die Länge der ersten Gelenkwelle von der Länge der zweiten Gelenkwelle nur um unvermeidliche Fertigungstoleranzen abweicht oder dass die Länge der ersten Gelenkwelle von der Länge der zweiten Gelenkwelle um weniger als 52mm abweicht. Die im Wesentlichen gleichlangen Gelenkwellen führen auch zu einer erhöhten Effizienz bzw. zu einem verbesserten Wirkungsgrad des Antriebsstranges.

Dadurch, dass das entsprechende Antriebsaggregat sowohl im Rechtslenkerfahrzeug wie auch im Linkslenkerfahrzeug einsetzbar ist, können besonders hohe Stückzahlen dieses Antriebsaggrates, nämlich eben sowohl für Rechtslenker- wie auch für Linkslenkerfahrzeuge realisiert werden. Das führt zu einer Kostenreduktion sowohl bei der Entwicklung wie auch bei der Herstellung des Antriebsaggregats bzw. bei der Beschaffung der Bauteile des Antriebsaggregates. Der Einsatz des Antriebsaggregats sowohl im Rechtslenkerfahrzeug wie auch im Linkslenkerfahrzeug wird insbesondere durch die Eigenschaft der Elektromaschine ermöglicht, in beiden Drehrichtungen der Antriebswelle gleich gute Leistung abgeben zu können.

Die Elektromaschine ist vorzugsweise sowohl im Rechtslenkerfahrzeug wie auch im Linkslenkerfahrzeug auf einer der Lenkwelle abgewandten Seite der Getriebeeinheit angeordnet.

Die Elektromaschine weist zur Bereitstellung einer hohen Antriebsleistung eine relativ große Ausdehnung in axialer Richtung der Antriebswelle auf. Weiterhin ist auch der Durchmesser der Elektromaschine relativ groß. Relativ ist hier in Bezug zur Größe des Pulswechselrichters gemeint. Aufgrund der Anordnung der Elektromaschine auf einer der Lenkwelle abgewandten Seite der Getriebeeinheit ist die Lenkwelle so besonders nah zu einer mittig im Fahrzeug verlaufenden Längsachse des Fahrzeuges an dem Antriebsaggregat vorbeiführbar, ohne dass das Antriebsaggregat dabei durch die Lenkwelle touchiert wird. Die Lenkwelle ist so insbesondere auf eine Mitte eines Fahrzeugsitzes ausrichtbar, nämlich insbesondere auf eine Mitte eines linken Fahrzeugsitzes im Linkslenkerfahrzeug und insbesondere auf eine Mitte eines rechten Fahrzeugsitzes im Rechtslenkerfahrzeug. Auch die Verbindung zwischen Lenkwelle und Lenkgetriebe ist somit besonders nah einer mittig im Fahrzeug verlaufenden Längsachse des Fahrzeuges ausführbar. Das wirkt sich positiv auf mögliche Ausführungen des Lenkgetriebes und somit positiv auf das Lenkverhalten des Fahrzeuges aus.

In einer bevorzugten Ausführungsform des Antriebsstranges weist das Antriebsaggregat ein Antriebsaggregat-Gehäuse auf, wobei an dem Antriebsaggregat-Gehäuse auf einer ersten, A-Seite des Antriebsaggregat-Gehäuses mehrere A-Seiten-Befestigungspunkte ausgebildet sind. An dem Antriebsaggregat-Gehäuse sind weiterhin auf einer zweiten, der A-Seite gegenüberliegenden B-Seite des Antriebsaggregat-Gehäuses mehrere B-Seiten-Befestigungspunkte ausgebildet. Das Antriebsaggregat-Gehäuse ist mittels zumindest zwei der A-Seiten-Befestigungspunkte an einer vorderen, Front-Einheitskonsole und mittels zumindest zwei der B-Seiten-Befestigungspunkte an einer hinteren Heck-Einheitskonsole befestigbar. Alternativ ist das Antriebsaggregat-Gehäuse mittels zumindest zwei der B-Seiten-Befestigungspunkte an der vorderen, Front-Einheitskonsole und mittels zumindest zwei der A-Seiten-Befestigungspunkte an der hinteren Heck-Einheitskonsole befestigbar. Die Front-Einheitskonsole und die Heck-Einheitskonsole sind an einer Karosserie des Kraftfahrzeuges ausgebildet.

Mittels der A-Seiten-Befestigungspunkte und der B-Seiten-Befestigungspunkte ist eine sichere Verbindung zwischen dem Antriebsaggregat und der Karosserie sowohl in einem Rechtslenkerfahrzeug wie auch in einem Linkslenkerfahrzeug ermöglicht. Ein jeder der Befestigungspunkte weist zum Beispiel ein Innengewinde auf, so dass das Antriebsaggregat mittels einer Schraube mit der Front-Einheitskonsole und der Heck-Einheitskonsole verbindbar ist. Die Innengewinde der Befestigungspunkte verlaufen dabei vorzugsweise in einer waagerechten Richtung. Andere Verbindungstechniken zwischen dem Antriebsaggregat und den beiden Einheitskonsolen sind denkbar. Weiterhin weist ein jeder Befestigungspunkt jeweils eine Übertragungsfläche auf, wobei mittels dieser Übertragungsflächen jeweils eine Kraft und / oder ein Moment zwischen dem Antriebsaggregat und den beiden Einheitskonsolen übertragbar ist. Die Front-Einheitskonsole ist in Fahrtrichtung vor dem Antriebsaggregat und die Heck-Einheitskonsole ist in Fahrtrichtung hinter dem Antriebsaggregat angeordnet.

Bevorzugterweise entspricht eine Anordnung der A-Seiten-Befestigungspunkte zueinander einer Anordnung der B-Seiten-Befestigungspunkte zueinander, wobei insbesondere die Anordnung der A-Seiten-Befestigungspunkte zu der Anordnung der B-Seiten-Befestigungspunkte an einer vertikalen, mittig in einer Querrichtung durch das Antriebsaggregat-Gehäuse laufenden Ebene gespiegelt ist.

Jeweils einer der A-Seiten-Befestigungspunkte und einer der B-Seiten-Befestigungspunkte liegen dabei bevorzugterweise in einer in Längsrichtung des Kraftfahrzeuges verlaufenden Linie. Auch wenn die Front-Einheitskonsole und die Heck-Einheitskonsole unterschiedlich ausgeführt sind, was aufgrund der Belastungen der Front-Einheitskonsole und der Heck-Einheitskonsole durchaus sinnvoll ist, ist das Antriebsaggregat mittels der A-Seiten-Befestigungspunkte und der B-Seiten-Befestigungspunkte sowohl in dem Rechtslenkerfahrzeug wie auch dem Linkslenkerfahrzeug mit den beiden jeweiligen Einheitskonsolen verbindbar.

In einer weiteren Ausführungsform des Antriebsstranges sind fünf A-Seiten-Befestigungspunkte und fünf B-Seiten-Befestigungspunkte vorhanden bzw. ausgebildet.

So können die Kräfte und / oder Momente, welche zwischen dem Antriebsaggregat und den beiden Einheitskonsolen wirken, besonders gut und trotzdem mit einem vertretbaren konstruktiven Aufwand auf die verschiedenen Befestigungspunkte verteilt werden. Insbesondere zur Aufnahme der Momente sind voneinander beabstandet angeordnete Verbindungen zwischen den beiden Einheitskonsolen und dem Antriebsaggregat sinnvoll.

In einer bevorzugten Ausführungsform des Antriebsstranges sind jeweils ein Kühlmittelzulauf und ein Kühlmittelablauf auf der A-Seite des Antriebsaggregat-Gehäuses angeordnet. Weiterhin sind jeweils ein Kühlmittelzulauf und ein Kühlmittelablauf auf der B-Seite des Antriebsaggregat-Gehäuses angeordnet. Mittels eines der Kühlmittelzuläufe ist dem Antriebsaggregat-Gehäuse ein Kühlfluid zuführbar, wobei mittels eines der Kühlmittelabläufe ein Kühlfluid aus dem Antriebsaggregat-Gehäuse abführbar ist. Entweder der Kühlmittelzulauf und der Kühlmittelablauf der A-Seite, oder der Kühlmittelzulauf und der Kühlmittelablauf der B-Seite sind mittels jeweils eines Stopfens verschlossen und somit außer Funktion gesetzt.

Die Rohrleitungen oder Schläuche zur Zu- und zur Abfuhr des Kühlfluids sind in Fahrtrichtung vor dem Antriebsaggregat angeordnet. Denkbar ist alternativ auch eine Anordnung der Rohrleitungen oder Schläuche zur Zu- und zur Abfuhr des Kühlfluids in Fahrtrichtung hinter dem Antriebsaggregat. Dadurch, dass auf beiden Seiten des Antriebsaggregat-Gehäuses jeweils ein Kühlmittelzulauf und ein Kühlmittelablauf vorhanden sind, sind Rohrleitungen oder Schläuche sowohl im Rechtslenkerfahrzeug wie auch im Linkslenkerfahrzeug an das Antriebsaggregat anschließbar. Die beiden nicht genutzten Öffnungen, nämlich der nicht genutzte Kühlmittelzulauf und der nicht genutzte Kühlmittelablauf werden z.B. mittels jeweils eines Schraubstopfens dichtend verschlossen. Auf diese Weise wird die Flexibilität der Einsatzmöglichkeiten des Antriebsaggregats weiter erhöht. Der Kühlfluidkreislauf inklusive etwaiger Rohrleitungen und / oder Schläuche kann ohne Änderungen bezüglich des Antriebsaggregates sowohl im Rechtslenkerfahrzeug wie auch im Linkslenkerfahrzeug eingesetzt werden.

Bevorzugterweise sind der Kühlmittelzulauf der A-Seite und der Kühlmittelzulauf der B-Seite und / oder der Kühlmittelablauf der A-Seite und der Kühlmittelablauf der B-Seite mittels einer durchgehenden Bohrung miteinander verbunden. Diese Bohrung verläuft in Fahrtrichtung.

Auf diese Weise sind die beiden Kühlmittelabläufe und / oder die beiden Kühlmittelzuläufe besonders einfach herstellbar. Das wirkt sich sehr positiv auf die Herstellkosten des Antriebsaggregates aus.

In einer weiteren Ausführungsform des Antriebsstranges sind ein Eingangszahnrad und ein Ausgangszahnrad an der Getriebewelle angeordnet oder ausgebildet. An der Antriebswelle ist ein Antriebszahnrad ausgebildet oder angeordnet. Das Differential weist weiterhin ein Differentialzahnrad auf. Das Antriebszahnrad und das Eingangszahnrad stehen in Eingriff miteinander. Ebenso stehen das Ausgangszahnrad und das Differentialzahnrad in Eingriff miteinander. Insbesondere weisen das Antriebszahnrad, das Eingangszahnrad, das Ausgangszahnrad und / oder das Differentialzahnrad eine Schrägverzahnung auf.

Die Zahnräder sind dabei als Stirnzahnräder ausgebildet und zu einem Stirnradgetriebe angeordnet. Solche Stirnradgetriebe sind robust und kostengünstig herstellbar. Mittels der Schrägverzahnung kann eine geringe Geräuschentwicklung der gesamten Getriebeeinheit und eine hohe Tragfähigkeit der einzelnen Zahnräder erreicht werden.

In dem Antriebsaggregat-Gehäuse ist vorteilhafterweise zumindest ein Öltank angeordnet. In dem Antriebsaggregat-Gehäuse ist zudem zumindest ein Ölsumpfbereich ausgebildet, wobei das Differentialzahnrad planschend im Ölsumpfbereich angeordnet ist. Angrenzend zum Öltank sind ein erster und ein zweiter Ölfänger angeordnet, wobei an dem ersten Ölfänger ein Linkslenker-Führungsbereich und dem zweiten Ölfänger ein Rechtslenker-Führungsbereich ausgebildet ist, wobei mittels des Linkslenker-Führungsbereichs von dem Differentialzahnrad aus dem Ölsumpfbereich empor geschleudertes Öl dem Öltank bei einer ersten Drehrichtung des Differentialzahnrads zuführbar ist, und wobei mittels des Rechtslenker-Führungsbereichs von dem Differentialzahnrad aus dem Ölsumpfbereich empor geschleudertes Öl dem Öltank bei einer zweiten, der ersten Drehrichtung entgegengesetzten Drehrichtung des Differentialzahnrads zuführbar ist.

Das Differentialzahnrad dreht sich bei einer Vorwärtsfahrt des Kraftfahrzeuges im Rechtslenkerfahrzeug im Gegensatz zum Linkslenkerfahrzeug in der entgegensetzten Drehrichtung. Wie oben beschrieben wird dem Öltank in beiden Fällen Öl aus dem Ölsumpfbereich zugeführt. Der Linkslenker-Führungsbereich ist derart angeordnet, dass bei einer Vorwärtsfahrt des Linkslenkerfahrzeugs dem Öltank von dem Differentialzahnrad aus dem Ölsumpfbereich empor geschleudertes Öl mittels des Linkslenker-Führungsbereichs zuführbar ist. Der Rechtslenker-Führungsbereich ist derart angeordnet, dass bei einer Vorwärtsfahrt des Rechtslenkerfahrzeugs dem Öltank von dem Differentialzahnrad aus dem Ölsumpfbereich empor geschleudertes Öl mittels des Rechtslenker-Führungsbereichs zuführbar ist.

Bevorzugterweise ist in dem Öltank ein Öltankbereich ausgebildet, wobei das Antriebszahnrad planschend in dem Öltankbereich angeordnet ist. In dem Antriebsaggregat-Gehäuse sind mehrere Kontakte angeordnet, wobei mittels der Kontakte elektrische Energie zwischen dem Pulswechselrichter und der Elektromaschine übertragbar ist. Die Kontakte sind mittels des von dem Antriebszahnrad aus dem Öltankbereich empor geschleuderten Öls kühlbar.

Aufgrund der hohen elektrischen Energie, welche mittels der Kontakte übertragen wird, entsteht Wärme in den Kontakten. Diese führt zu einer Temperaturerhöhung der Kontakte. Mittels des empor geschleuderten Öls erfolgt eine Abfuhr von Wärme von den Kontakten, so dass die Temperaturerhöhung der Kontakte in einem akzeptablen Bereich bleibt, in welchem die Funktion der Kontakte sichergestellt ist. Der Öltank kann weiterhin zur Schmierung von Lagern genutzt werden, so dass hier Synergieeffekte entstehen.

In einer weiteren Ausführungsform des Antriebsstranges, ist die Getriebewelle mittels zumindest zweier Lager in dem Antriebsaggregat-Gehäuse gelagert, wobei die Lager der Getriebewelle in beiden Drehrichtungen der Getriebewelle eine derartige Anordnung und/oder Dimensionierung aufweisen, so dass die Funktion der beiden Lager für eine in der Auslegung der Lager vorbestimmte Lebensdauer für eine Vorwärtsfahrt des Kraftfahrzeugs sichergestellt ist.

Die Getriebeeinheit ist somit universell sowohl im Rechtslenkerfahrzeug wie auch im Linkslenkerfahrzeug einsetzbar, ohne dass mit einer verfrühten Wartung der Getriebeeinheit zu rechnen ist. Vorzugsweise wird die Getriebewelle auf beiden Seiten mit einem gleichartig ausgeführten Lager gelagert.

Das Antriebsaggregat-Gehäuse ist bevorzugterweise mehrteilig ausgeführt und weist ein Elektromaschinenteilgehäuse, ein Getriebeteilgehäuse und ein Pulswechselrichterteilgehäuse auf, wobei die Elektromaschine in dem Elektromaschinenteilgehäuse, die Getriebeeinheit in dem Getriebeteilgehäuse und der Pulswechselrichter in dem Pulswechselrichterteilgehäuse angeordnet ist. An dem Pulswechselrichterteilgehäuse ist eine Abschrägung ausgebildet, wobei eine Achse der Lenkwelle in einem Bereich angrenzend zur Abschrägung, insbesondere im Wesentlichen parallel zur Abschrägung angeordnet ist.

Die Abschrägung ist vorteilhafterweise an einer der Getriebeeinheit abgewandten Stirnseite des Pulswechselrichterteilgehäuses ausgebildet.

Bevorzugterweise weist die Abschrägung einen Winkel zu einer senkrecht zur Getriebewelle verlaufenden Ebene auf, wobei der Abstand der der Getriebeeinheit abgewandten Stirnseite des Pulswechselrichterteilgehäuses zum Getriebeteilgehäuse in einem oberen Bereich der der Getriebeeinheit abgewandten Stirnseite des Pulswechselrichterteilgehäuses größer ist als in dem unteren Bereich der der Getriebeeinheit abgewandten Stirnseite des Pulswechselrichterteilgehäuses.

So kann der im Fahrzeug zur Verfügung stehende Bauraum optimal genutzt werden. Zwischen der Lenkwelle und dem Pulswechselrichterteilgehäuse entsteht nur ein kleiner Spalt, mittels welchem sichergestellt wird, dass die Lenkwelle nicht das Pulswechselrichterteilgehäuse touchiert. Größere ungenutzte Bereiche entstehen nicht. Die Ausbildung eines solchen unsymmetrischen Pulswechselrichterteilgehäuses wird durch eine entsprechende Anordnung der Bauteile des Pulswechselrichters im Inneren des Pulswechselrichterteilgehäuses ermöglicht. Im Gegensatz zur Anordnung der Bauteile der Elektromaschine besteht bei der Anordnung der Bauteile des Pulswechselrichters eine gewisse Flexibilität.

In einer weiteren Ausführungsform des Antriebsstranges sind die erste Gelenkwelle und die zweite Gelenkwelle jeweils in einem Beugungswinkel zu einer horizontalen Ebene angeordnet. Die Beugungswinkel der ersten Gelenkwelle und der zweiten Gelenkwelle weisen im Wesentlichen gleiche Werte auf, wobei die Beugungswinkel der ersten Gelenkwelle und der zweiten Gelenkwelle insbesondere kleiner als 7,5° sind. Mit dem Ausdruck "im Wesentlichen" ist hier gemeint, dass die Beugungswinkel sich lediglich aufgrund unvermeidlicher Fertigungstoleranzen voneinander unterscheiden, oder dass die Beugungswinkel sich lediglich um weniger als 2° voneinander unterscheiden. Durch solch kleine Beugungswinkel können Reibungsverluste im Antriebsstrang minimiert werden, was zu einer Steigerung der Effizienz des Antriebsstranges führt.

Es gibt nun eine Vielzahl von Möglichkeiten das Kraftfahrzeug bzw. den Antriebsstrang in vorteilhafter Art und Weise auszugestalten und weiterzubilden. Es darf hierzu zunächst auf die dem Patentanspruch 1 nachgeordneten Patentansprüche verwiesen werden. Im Folgenden wird nun eine bevorzugte Ausgestaltung des Antriebsstrangs für ein Kraftfahrzeug anhand der Zeichnung und der dazugehörigen Beschreibung näher erläutert bzw. beschrieben. In der Zeichnung zeigt:
- Fig.1: in schematischer Darstellung ein Ausführungsbeispiel des Antriebsstranges in einem Rechtslenkerfahrzeug in einer Rückansicht (bzw. von hinten) im Schnitt,
- Fig.2: in schematischer Darstellung das Ausführungsbeispiel des Antriebsstranges in einem Linkslenkerfahrzeug in einer Rückansicht (bzw. von hinten) im Schnitt,
- Fig.3: in schematischer 3D-Darstellung das Ausführungsbeispiel des Antriebsstranges in einem Rechtslenkerfahrzeug in einer Vorderansicht (bzw. von vorne),
- Fig.4: in schematischer 3D-Darstellung ein Antriebsaggregat des Antriebsstranges in einem Linkslenkerfahrzeug in einer Vorderansicht (bzw. von vorne), jedoch ohne Darstellung der Lenkwelle,
- Fig.5: in schematischer 3D-Darstellung das Ausführungsbeispiel des Antriebsstranges in einem Linkslenkerfahrzeug in einer Vorderansicht (bzw. von vorne),
- Fig.6: in schematischer 3D-Darstellung das Ausführungsbeispiel des Antriebsstranges in einem Linkslenkerfahrzeug in einer Rückansicht (bzw. von hinten),
- Fig.7: in schematischer 3D-Darstellung das Antriebsaggregat des Antriebsstranges in einer Seitenansicht im Schnitt, und
- Fig.8: in schematischer 3D-Darstellung eine Getriebeeinheit des Antriebsstranges in einer Seitenansicht, jedoch ohne ein Getriebeteilgehäuse.

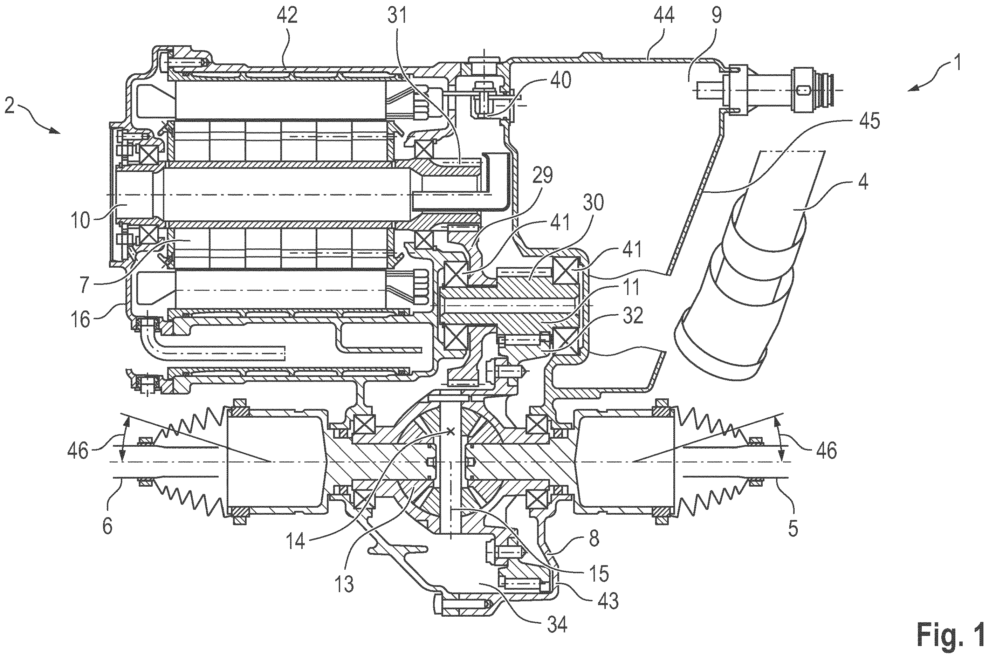

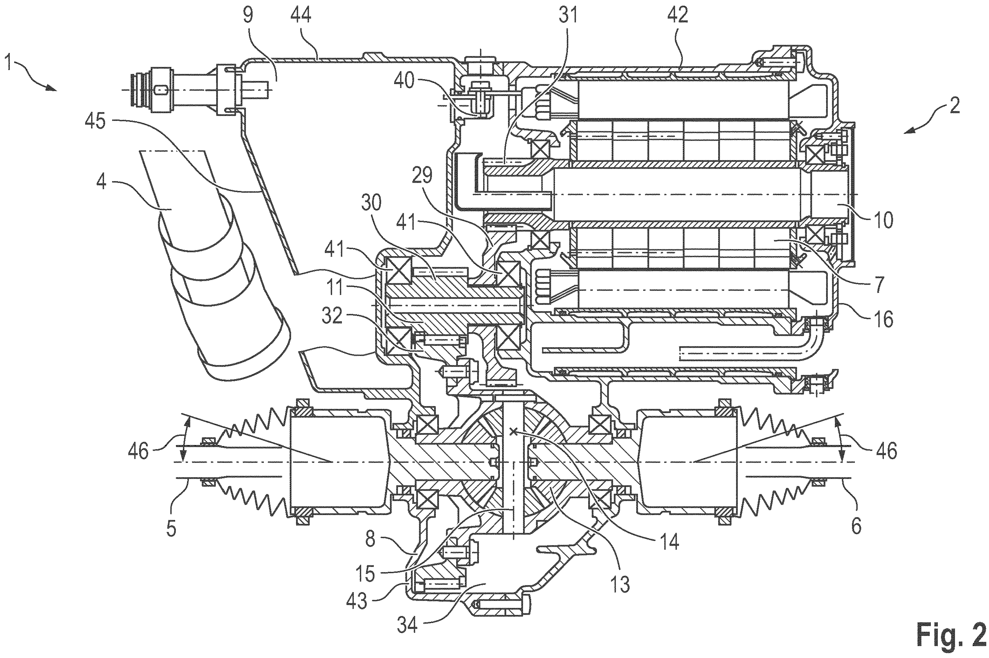

In der Fig.1 und der Fig. 2 ist jeweils in schematischer Darstellung ein Ausführungsbeispiel eines Antriebsstranges 1 in einer Rückansicht im Schnitt gezeigt. Der Antriebsstrang 1 ist für den Einsatz in einem Kraftfahrzeug vorgesehen.

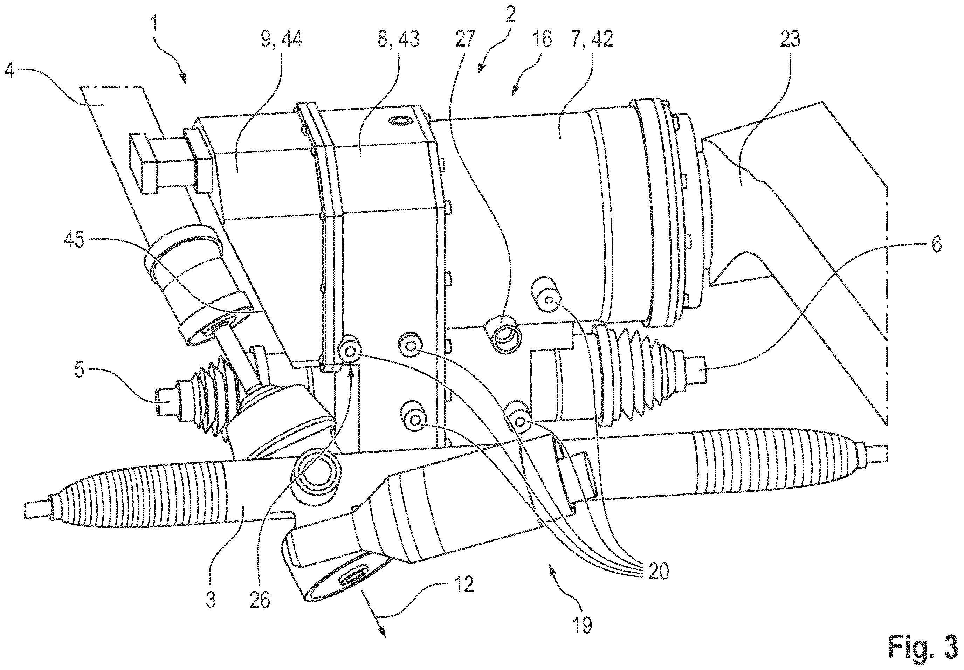

In Fig. 3 ist der Antriebsstrang 1 in schematischer 3D-Darstellung in einer Vorderansicht dargestellt.

In den Fig.1 bis Fig. 3 werden für gleiche Bauteile gleiche Bezugszeichen verwendet.

Der Antriebsstrang 1 weist ein Antriebsaggregat 2, ein Lenkgetriebe 3, eine Lenkwelle 4, eine erste Gelenkwelle 5 und eine zweite Gelenkwelle 6 auf. Das Antriebsaggregat 2 weist eine Elektromaschine 7, eine Getriebeeinheit 8 und einen Pulswechselrichter 9 auf. Die Elektromaschine 7 und der Pulswechselrichter 9 sind auf zwei gegenüberliegenden Seiten der Getriebeeinheit 8 angeordnet. Die Getriebeeinheit 8 ist somit zwischen dem Pulswechselrichter 9 und der Elektromaschine 7 angeordnet. Die Elektromaschine 7 weist eine Antriebswelle 10 und die Getriebeeinheit 8 weist eine Getriebewelle 11 auf. Es ist denkbar, dass die Getriebeeinheit 8 zur Ausbildung weiterer Getriebestufen zusätzliche Getriebewellen aufweist. Die Antriebswelle 10 und die Getriebewelle 11 verlaufen im Wesentlichen horizontal und im Wesentlichen senkrecht zu einer Fahrtrichtung 12 des Kraftfahrzeugs. Die Antriebswelle 10 und die Getriebewelle 11 sind somit in einer Querrichtung des Kraftfahrzeuges angeordnet. Mit dem Ausdruck "im Wesentlichen" ist hier gemeint, dass die Abweichung von dieser Querrichtung nicht über die Fertigungstoleranzen hinausgeht.

Das Lenkgetriebe 3 ist in Fahrtrichtung 12 (Vorwärts-Fahrtrichtung des Fahrzeuges) vor dem Antriebsaggregat 2 angeordnet. So kann auch bei einem hecklastigen Kraftfahrzeug ein untersteuerndes Fahrverhalten erreicht werden. Eine solche Hecklastigkeit wird z.B. durch eine Fahrzeugbatterie, welche zur Versorgung der Elektromaschine 7 entsprechend groß und schwer ausgeführt ist, verursacht. Die Hecklastigkeit kann des Weiteren auch durch eine weitere, an einer Hinterachse des Kraftfahrzeuges angeordnete Elektromaschine verursacht werden. Das Lenkgetriebe 3 ist mittels der Lenkwelle 4 mit einem Lenkrad des Kraftfahrzeugs funktional wirksam verbindbar. Mittels des Lenkrades, der Lenkwelle 4 und des Lenkgetriebes 3 ist eine Kurvenfahrt des Kraftfahrzeuges durchführbar. Die Lenkwelle 4 ist teils seitlich neben dem Antriebsaggregat 2 angeordnet. Die Lenkwelle 4 ist somit seitlich neben einer parallel zur Längsrichtung des Kraftfahrzeugs verlaufenden Stirnseite des Antriebsaggregates 2 angeordnet. Die Getriebeeinheit 8 weist weiterhin ein Differential 13 auf, wobei das Differential 13 mittels der ersten Gelenkwelle 5 mit einem ersten Vorderrad des Kraftfahrzeuges verbindbar ist, und wobei das Differential 13 mittels der zweiten Gelenkwelle 6 mit einem zweiten Vorderrad des Kraftfahrzeuges wirksam verbindbar ist. Das Lenkgetriebe 3 ist somit insbesondere auch in Fahrtrichtung 12 (Vorwärts-Fahrtrichtung des Fahrzeuges) vor der ersten Gelenkwelle 5 und vor der zweiten Gelenkwelle 6 angeordnet, wie aus den Figuren unter Berücksichtigung des Pfeils "12" für die Vorwärts-Fahrtrichtung ersichtlich.

Das Differential 13 ist im Wesentlichen mittig auf einer im Kraftfahrzeug mittig verlaufenden Längsachse 14 des Kraftfahrzeugs angeordnet, wobei eine Länge der ersten Gelenkwelle 5 einer Länge der zweiten Gelenkwelle 6 im Wesentlichen entspricht. Das Antriebsaggregat 2 ist so angeordnet und / oder ausgebildet, dass das Antriebsaggregat 2 sowohl in einem Rechtslenkerfahrzeug wie auch in einem Linkslenkerfahrzeug anordnenbar ist.

Fig. 1 zeigt das Antriebsaggregat 2 in dem Rechtslenkerfahrzeug, Fig 2 in dem Linkslenkerfahrzeug. Die Anordnung des Antriebsaggregats 2 im Rechtslenkerfahrzeug ist gegenüber der Anordnung des Antriebsaggregats im Linkslenkerfahrzeug um 180° zu einer vertikalen Hochachse 15 bzw. um eine vertikale Hochachse 15 gedreht ausgeführt. Wenn das Antriebsaggregat 2 in dem Rechtslenkerfahrzeug angeordnet ist, dann ist die Lenkwelle 4 in Bezug zur Fahrtrichtung 12 bzw. in Fahrtrichtung 12 gesehen rechts neben dem Antriebsaggregat 2 angeordnet. Wenn das Antriebsaggregat 2 alternativ in dem Linkslenkerfahrzeug angeordnet ist, dann ist die Lenkwelle 4 in Bezug zur Fahrtrichtung 12 bzw. in Fahrtrichtung 12 gesehen links neben dem Antriebsaggregat 2 angeordnet.

Die Elektromaschine 7 ist sowohl im Rechtslenkerfahrzeug wie auch im Linkslenkerfahrzeug auf einer der Lenkwelle 4 abgewandten Seite der Getriebeeinheit 8 angeordnet. Die Lenkwelle 4 verläuft somit mit einem kleinen Abstand neben dem Pulswechselrichter 9. Die Lenkwelle 4 ist einteilig oder mehrteilig ausgeführt. Die Lenkwelle 4 weist optional ein Kardangelenk auf.

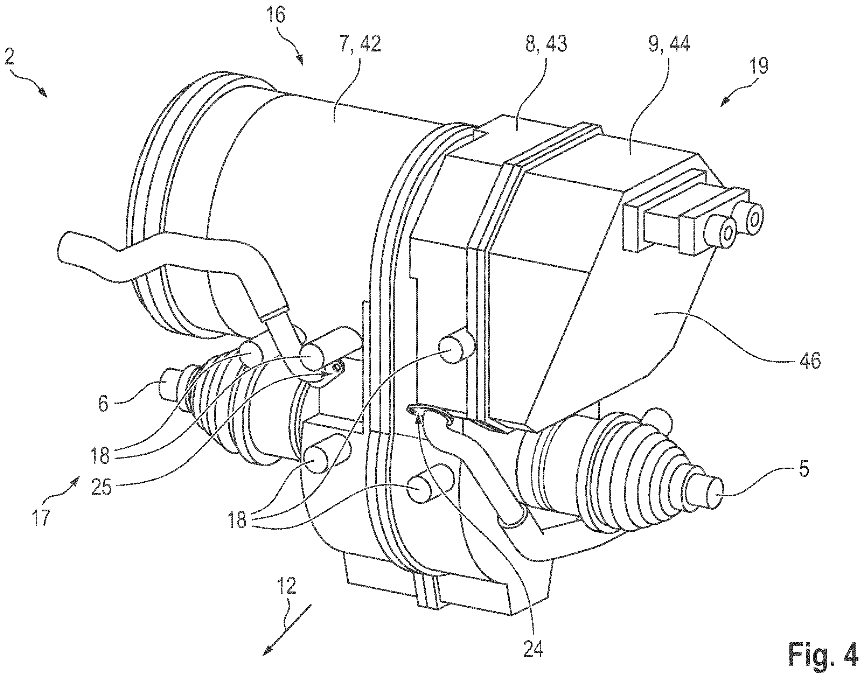

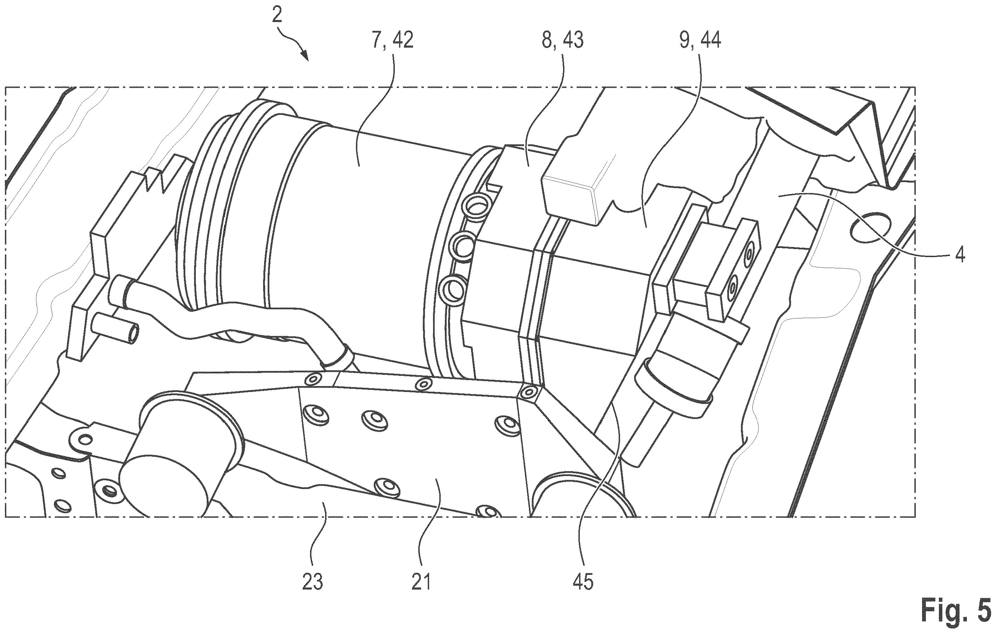

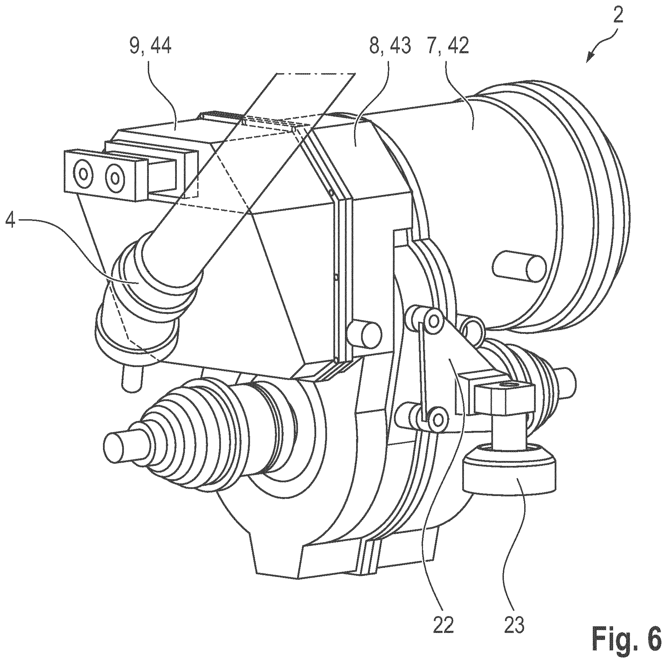

Fig. 4 zeigt in schematischer, leichter 3D-Darstellung das Antriebsaggregat 2 des Antriebsstranges 1 in einem Linkslenkerfahrzeug in einer Vorderansicht. In Fig. 5 ist in schematischer 3D-Darstellung der Antriebsstrang 1 in einem Linkslenkerfahrzeug in einer Vorderansicht dargestellt. Fig. 6 zeigt demgegenüber in schematischer 3D-Darstellung den Antriebsstrang 1 in einem Linkslenkerfahrzeug in einer Rückansicht. Für gleiche Bauteile werden in den Fig. 4 bis 6 die gleichen Bezugszeichen wie zu den vorangehenden Figuren verwendet. Aus den Fig. 4 bis 6 ist insbesondere die mechanische Anbindung des Antriebsaggregates 2 ersichtlich.

Das Antriebsaggregat 2 weist ein Antriebsaggregat-Gehäuse 16 auf. An dem Antriebsaggregat- Gehäuse 16 sind auf einer ersten, A-Seite 17 des Antriebsaggregat-Gehäuses 16 mehrere A-Seiten-Befestigungspunkte 18 ausgebildet. An dem Antriebsaggregat-Gehäuse 16 sind auf einer zweiten, der A-Seite 17 gegenüberliegenden B-Seite 19 des Antriebsaggregat-Gehäuses 16 mehrere B-Seiten-Befestigungspunkte 20 ausgebildet. Das Antriebsaggregat-Gehäuse 16 ist mittels zumindest zwei der A-Seiten-Befestigungspunkte 18 an einer vorderen, Front-Einheitskonsole 21 und mittels zumindest zwei der B-Seiten-Befestigungspunkte 20 an einer hinteren Heck-Einheitskonsole 22 befestigt. Diese Situation ist in den Fig. 5 und 6 gezeigt.

In dem Rechtslenkerfahrzeug ist das Antriebsaggregat-Gehäuse 16 mittels zumindest zwei der B-Seiten-Befestigungspunkte 20 an der vorderen, Front-Einheitskonsole 21 und mittels zumindest zwei der A-Seiten-Befestigungspunkte 18 an der hinteren Heck-Einheitskonsole 22 befestigt. Die Front-Einheitskonsole 21 und die Heck-Einheitskonsole 22 sind an der Karosserie 23 des Kraftfahrzeuges ausgebildet oder mit dem Fahrgestell verbunden.

Eine Anordnung der A-Seiten-Befestigungspunkte 18 zueinander entspricht einer Anordnung der B-Seiten-Befestigungspunkte 20 zueinander, wobei die jeweilige Anordnung gespiegelt ist an einer vertikalen, mittig in einer Querrichtung durch das Antriebsaggregat-Gehäuse 16 laufenden Ebene. Die A-Seiten-Befestigungspunkte 18 und die B-Seiten-Befestigungspunkte 20 weisen somit ein gleiches "Muster" auf. Die Front-Einheitskonsole 21 und die Heck-Einheitskonsole 22 sind aufgrund dieses gleichen "Musters" universell sowohl im Rechtlenkerfahrzeug wie auch im Linkslenkerfahrzeug einsetzbar, ohne dass dazu die Front-Einheitskonsole 21 und die Heck-Einheitskonsole 22 konstruktiv geändert werden müssten.

Die Front-Einheitskonsole 21 und die Heck-Einheitskonsole 22 weisen jeweils eine vertikal ausgerichtete Platte auf. In die Front-Einheitskonsole 21 und die Heck-Einheitskonsole 22 sind horizontal Bohrungen eingebracht, mittels welcher die Front-Einheitskonsole 21 und die Heck-Einheitskonsole 22 an dem Antriebsaggregat-Gehäuse 16 befestigt sind. Dazu werden entsprechende Schrauben oder Bolzen verwendet. Andere Befestigungsarten zwischen der Front-Einheitskonsole 21 und der Heck-Einheitskonsole 22 und dem Antriebsaggregat-Gehäuse 16 sind denkbar.

Es sind insgesamt fünf A-Seiten-Befestigungspunkte 18 und fünf B-Seiten-Befestigungspunkte 20 vorhanden. Dabei wird die Verbindung zwischen dem Antriebsaggregat-Gehäuse 16 und der Front-Einheitskonsole 21 mittels allen fünf Befestigungspunkten der A-Seite 17 oder der B-Seite 19 umgesetzt. Die Verbindung zwischen dem Antriebsaggregat-Gehäuse 2 und der Heck-Einheitskonsole 22 wird mittels drei der fünf Befestigungspunkte der A-Seite 17 oder der B-Seite 19 umgesetzt. Damit wird der unterschiedlichen Belastungssituation an der Front-Einheitskonsole 21 und der Heck-Einheitskonsole 22 Rechnung getragen. Die fünf Befestigungspunkte sind in drei obere und zwei untere Befestigungspunkte aufgeteilt, wobei die Heck-Einheitskonsole 22 mittels der beiden unteren Befestigungspunkte und eines mittleren oberen Befestigungspunktes mit dem Antriebsaggregat-Gehäuse 16 verbunden ist.

Auf der A-Seite 17 des Antriebsaggregat-Gehäuses 2 sind ein Kühlmittelzulauf 24 und ein Kühlmittelablauf 25 und auf der B-Seite 19 des Antriebsaggregat-Gehäuses 2 sind ein Kühlmittelzulauf 26 und ein Kühlmittelablauf 27 angeordnet. Mittels eines der Kühlmittelzuläufe 24 oder 26 ist dem Antriebsaggregat-Gehäuse 2 ein Kühlfluid zuführbar. Mittels eines der Kühlmittelabläufe 25 oder 27 ist ein Kühlfluid aus dem Antriebsaggregat-Gehäuse 2 abführbar. Entweder der Kühlmittelzulauf 24 und der Kühlmittelablauf 25 der A-Seite 17, oder der Kühlmittelzulauf 26 und der Kühlmittelablauf 27 der B-Seite 19 sind mittels jeweils eines Stopfens verschlossen und somit außer Funktion gesetzt. So können gleiche, im Kraftfahrzeug angeordnete Anschlussleitungen und / oder Anschlussschläuche genutzt werden, mittels welcher das Antriebsaggregat 2 in einen Kühlfuidkreislauf integrierbar ist. Solche Anschlussleitungen und / oder Anschlussschläuche sind dabei an dem Kühlmittelzulauf 24 oder 26 und dem Kühlmittelablauf 25 oder 27 abdichtend angeschlossen.

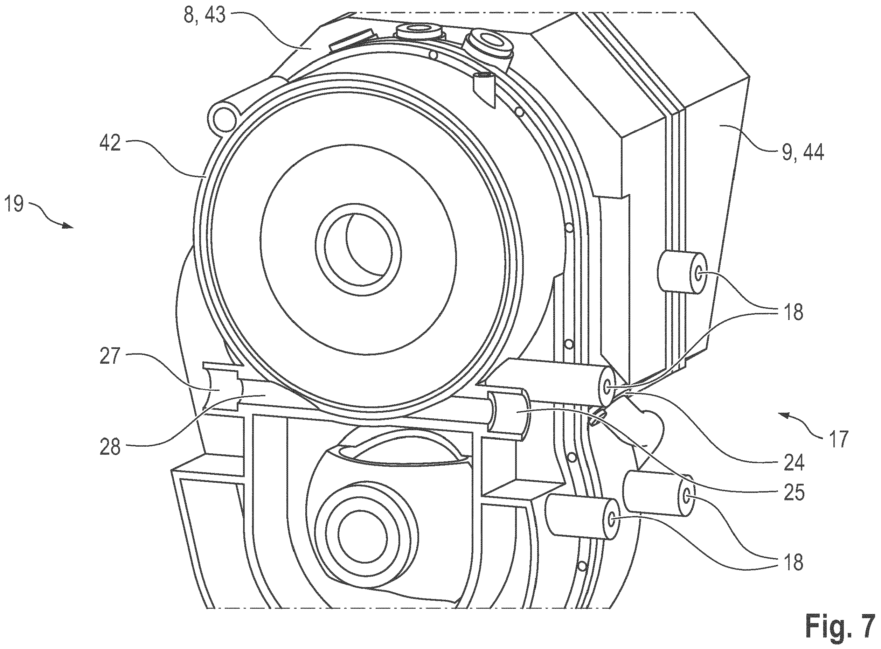

Fig. 7 zeigt in schematischer 3D-Darstellung das Antriebsaggregat 2 des Antriebsstranges 1 in einer Seitenansicht im Schnitt. Für gleiche Bauteile werden in Fig. 7 die gleichen Bezugszeichen wie zu den vorangehenden Figuren verwendet.

Der Kühlmittelablauf 25 der A-Seite 17 und der Kühlmittelablauf 27 der B-Seite 19 sind mittels einer durchgehenden Bohrung 28 miteinander verbunden, wobei diese Bohrung 28 in Fahrtrichtung 12 verläuft. Es ist denkbar, dass ebenso der Kühlmittelzulauf 24 der A-Seite 17 und der Kühlmittelzulauf 26 der B-Seite 19 mit einer vergleichbaren durchgehenden Bohrung miteinander verbunden sind.

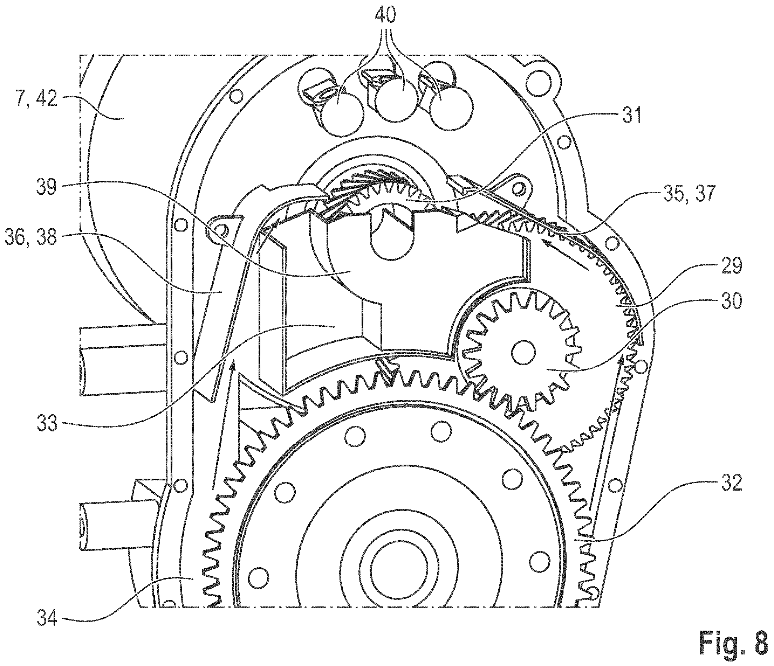

In Fig.8 ist in schematischer 3D-Darstellung die Getriebeeinheit 8 des Antriebsstranges 1 in einer Seitenansicht dargestellt. Teile des Antriebsaggregat-Gehäuses 16 wurden dabei weggelassen, um die Bauteile innerhalb des Antriebsaggregat-Gehäuses 16 sichtbar zu machen. Für gleiche Bauteile werden in Fig. 8 die gleichen Bezugszeichen wie zu den vorangehenden Figuren verwendet.

Ein Eingangszahnrad 29 und ein Ausgangszahnrad 30 sind an der Getriebewelle 11 angeordnet oder ausgebildet. An der Antriebswelle 10 ist ein Antriebszahnrad 31 ausgebildet oder angeordnet. Das Differential 13 weist ein Differentialzahnrad 32 auf. Das Antriebszahnrad 31 und das Eingangszahnrad 29 stehen in Eingriff miteinander und das Ausgangszahnrad 30 und das Differentialzahnrad 32 stehen in Eingriff miteinander. Das Antriebszahnrad 31, das Eingangszahnrad 29, das Ausgangszahnrad 30 und / oder das Differentialzahnrad 32 weisen insbesondere eine Schrägverzahnung auf. Denkbar wäre es auch eine gerade Verzahnung zumindest für zwei im Eingriff miteinander stehende Zahnräder zu verwenden. Das Antriebszahnrad 31, das Eingangszahnrad 29, das Ausgangszahnrad 30 und das Differentialzahnrad 32 bilden ein Stirnradgetriebe mit zwei Getriebestufen. Mittels des Differentials 13 ist ein Drehmoment zwischen dem Differentialzahnrad 32 und beiden Gelenkwellen, nämlich der ersten Gelenkwelle 5 und der zweiten Gelenkwelle 6 übertragbar.

In dem Antriebsaggregat-Gehäuse 16 ist zumindest in Öltank 33 angeordnet. In dem Antriebsaggregat-Gehäuse 16 ist zumindest ein Ölsumpfbereich 34 ausgebildet, wobei das Differentialzahnrad 32 planschend im Ölsumpfbereich 34 angeordnet ist. Die Getriebeeinheit 8 ist mit einem Öl gefüllt, welches sich aufgrund der Schwerkraft zumindest teilweise im Ölsumpfbereich 34 sammelt, bzw. während des Betriebs der Getriebeeinheit 8 zumindest teilweise immer wieder in den Ölsumpfbereich 34 zurückfließt. Angrenzend zum Öltank 33 sind ein erster Ölfänger 35 und ein zweiter Ölfänger 36 angeordnet, wobei an dem ersten Ölfänger 35 ein Linkslenker-Führungsbereich 37 und dem zweiten Ölfänger 36 ein Rechtslenker-Führungsbereich 38 ausgebildet ist. Mittels des Linkslenker-Führungsbereichs 37 ist von dem Differentialzahnrad 32 aus dem Ölsumpfbereich 34 empor geschleudertes Öl dem Öltank 33 bei einer ersten Drehrichtung des Differentialzahnrads 32 zuführbar. Die erste Drehrichtung des Differentialzahnrads 32 tritt bei einer Vorwärtsfahrt des als Linkslenkerfahrzeug ausgebildeten Kraftfahrzeuges auf.

Mittels des Rechtslenker-Führungsbereichs 38 ist von dem Differentialzahnrad 32 aus dem Ölsumpfbereich 34 empor geschleudertes Öl dem Öltank 33 bei einer zweiten, der ersten Drehrichtung entgegengesetzten Drehrichtung des Differentialzahnrads 32 zuführbar. Die zweite Drehrichtung des Differentialzahnrads 32 tritt bei einer Vorwärtsfahrt des als Rechtslenkerfahrzeug ausgebildeten Kraftfahrzeuges auf. Der Öltank wird somit sowohl bei Einsatz im Linkslenkerfahrzeug wie auch im Rechtslenkerfahrzeug bei einer Fahrt des Kraftfahrzeugs mit Öl gefüllt. Der Linkslenker-Führungsbereich 37 und der Rechtslenker-Führungsbereich 38 weisen jeweils eine Abstreifkante auf, von welcher das Öl von dem Linkslenker-Führungsbereich 37 bzw. dem Rechtslenker-Führungsbereich 38 in den darunter angeordneten Öltank 33 hineintropft bzw. hineinfließt.

In dem Öltank 33 ist ein Öltankbereich 39 ausgebildet, wobei das Antriebszahnrad 31 planschend in dem Öltankbereich 39 angeordnet ist. Es sind mehrere Kontakte 40 in dem Antriebsaggregat-Gehäuse 16 angeordnet, wobei mittels der Kontakte 40 elektrische Energie zwischen dem Pulswechselrichter 9 und der Elektromaschine 7 übertragbar ist. Die elektrische Energie ist dabei in beiden Richtungen übertragbar, so dass mittels der Elektromaschine 7 Energie zum Antrieb des Kraftfahrzeugs bereitstellbar ist, wobei weiterhin mittels der Elektromaschine 7 kinetische Energie des Kraftfahrzeugs rekuperierbar ist und über den Pulswechselrichter 9 z.B. an eine Batterie des Kraftfahrzeugs weiterleitbar ist. Die Kontakte 40 sind mittels des von dem Antriebszahnrad 31, aus dem Öltankbereich 39 empor geschleuderten Öls kühlbar. Auf diese Weise ist sichergestellt, dass die Kontakte bei Betrieb des Kraftfahrzeuges eine maximal zulässige Temperatur nicht überschreiten. Der Öltankbereich 39 ist an die Form und Größe des Antriebszahnrades 31 angepasst, so dass sichergestellt ist, dass während des Betriebs des Kraftfahrzeugs das Antriebszahnrades 31 immer weit genug in das sich in dem Öltankbereich 39 ansammelnden Öl eintaucht.

Die Getriebewelle 11 ist mittels zumindest zweier Lager 41 in dem Antriebsaggregat-Gehäuse 16 gelagert. Die Lager 41 der Getriebewelle 11 weisen in beiden Drehrichtungen der Getriebewelle 11 eine derartige Anordnung und/oder Dimensionierung auf, so dass die Funktion der beiden Lager 41 für eine in der Auslegung der Lager 41 vorbestimmte Lebensdauer für eine Vorwärtsfahrt des Kraftfahrzeugs sichergestellt ist. Die Drehrichtung der Getriebewelle 11 weist im Gegensatz zum Rechtslenkerfahrzeug im Linkslenkerfahrzeug eine entgegengesetzte Richtung auf, wenn sich das Kraftfahrzeug jeweils in einer Vorwärtsfahrt befindet. Es genügt also aufgrund der gewünschten Flexibilität nicht, eines der beiden Lager 41 lediglich für eine Rückwärtsfahrt des Kraftfahrzeugs auszulegen. Die dadurch entstehenden zusätzlichen Kosten durch teilweise "zu groß" dimensionierte Lager 41 werden durch die Wahl einheitlicher Komponenten und der damit verbundenen Verringerung der Beschaffungskosten wieder kompensiert. Neben der Lager 41 sind auch alle weiteren Komponenten der Getriebeeinheit 8, wie z.B. die Verzahnungen für eine in der Auslegung dieser Komponenten vorbestimmte Lebensdauer für eine Vorwärtsfahrt des Kraftfahrzeugs für beiden Drehrichtungen der Getriebewelle 11 ausgelegt.

Das Antriebsaggregat-Gehäuse 16 ist mehrteilig ausgeführt und weist ein Elektromaschinenteilgehäuse 42, ein Getriebeteilgehäuse 43 und ein Pulswechselrichterteilgehäuse 44 auf. Die Elektromaschine 7 ist in dem Elektromaschinenteilgehäuse 42, die Getriebeeinheit 8 in dem Getriebeteilgehäuse 43 und der Pulswechselrichter 9 in dem Pulswechselrichterteilgehäuse 44 angeordnet. Ebenso ist das Differential 13 in dem Getriebeteilgehäuse 43 angeordnet. An dem Pulswechselrichterteilgehäuse 44 ist eine Abschrägung 45 ausgebildet, wobei eine Achse der Lenkwelle 4 in einem Bereich angrenzend zur Abschrägung 45 im Wesentlichen parallel zur Abschrägung 45 angeordnet ist. Geringe Unterschiede in der Parallelität sind tolerierbar. Wichtig ist dabei, dass das Pulswechselrichterteilgehäuse 44 und die Lenkwelle 4 einander nicht touchieren und dass des Weiteren möglichst wenig Bauraum sowohl im Pulswechselrichterteilgehäuse 44 wie auch im gesamten Kraftfahrzeug verloren geht. Die Abschrägung 45 ist an einer der Getriebeeinheit 8 abgewandten Stirnseite des Pulswechselrichterteilgehäuses 44 ausgebildet.

Die Abschrägung 45 weist einen Winkel zu einer senkrecht zur Getriebewelle 11 verlaufenden Ebene auf, wobei der Abstand der der Getriebeeinheit 8 abgewandten Stirnseite des Pulswechselrichterteilgehäuses 44 zum Getriebeteilgehäuse 43 in einem oberen Bereich der der Getriebeeinheit 8 abgewandten Stirnseite des Pulswechselrichterteilgehäuses 44 größer ist, als in dem unteren Bereich der der Getriebeeinheit 8 abgewandten Stirnseite des Pulswechselrichterteilgehäuses 44. So wird der Tatsache Rechnung getragen, dass die Lenkwelle 4 von einem oberhalb des Lenkgetriebe 3 angeordneten Lenkrades schräg nach unten zu einer Fahrzeugmitte hin verläuft.

Die erste Gelenkwelle 5 und die zweite Gelenkwelle 6 sind jeweils in einem Beugungswinkel 46 zu einer horizontalen Ebene angeordnet. Die Beugungswinkel 46 der ersten Gelenkwelle 5 und der zweiten Gelenkwelle 6 weisen gleiche Werte auf. Die Beugungswinkel 46 der ersten Gelenkwelle 5 und der zweiten Gelenkwelle 6 sind insbesondere kleiner als 7,5°. Aufgrund dieser geringen Beugungswinkel 46 weist der Antriebsstrang 1 eine hohe Effizienz auf und führt zu einer guten Fahrdynamik des Kraftfahrzeugs.

Der Antriebsstrang 1 ist in einem rein elektrisch angetriebenen Kraftfahrzeug einsetzbar, wobei ausschließlich die beschriebene Elektromaschine 7 und kein weiterer Antrieb vorhanden ist, wobei ausschließlich die erste Gelenkwelle 5 und die zweite Gelenkwelle 6 und somit eine Vorderachse des Kraftfahrzeugs antreibbar ist.

Weiterhin ist der Einsatz zusätzlicher Elektromaschinen oder Verbrennungskraftmaschinen zur Ausbildung eines Hybridfahrzeugs denkbar.

Der Antriebsstrang 1 könnte auch in einem Allradfahrzeug zum Einsatz kommen. In diesem Falle wäre zumindest eine Kupplung im Antriebsstrang angeordnet, wobei mit der zumindest einen Kupplung die erste Gelenkwelle 5 und die zweite Gelenkwelle 6 einzeln oder gemeinsam von der Elektromaschine 7 entkoppelbar sind.

### Bezugszeichenliste

- 1: Antriebsstrang
- 2: Antriebsaggregat
- 3: Lenkgetriebe
- 4: Lenkwelle
- 5: erste Gelenkwelle
- 6: zweite Gelenkwelle
- 7: Elektromaschine
- 8: Getriebeeinheit
- 9: Pulswechselrichter
- 10: Antriebswelle
- 11: Getriebewelle
- 12: Fahrtrichtung
- 13: Differential
- 14: Längsachse
- 15: vertikale Hochachse
- 16: Antriebsaggregat-Gehäuse
- 17: A-Seite
- 18: A-Seiten-Befestigungspunkte
- 19: B-Seite
- 20: B-Seiten-Befestigungspunkte
- 21: Front-Einheitskonsole
- 22: Heck-Einheitskonsole
- 23: Karosserie
- 24: Kühlmittelzulauf der A-Seite
- 25: Kühlmittelablauf der A-Seite
- 26: Kühlmittelzulauf der B-Seite
- 27: Kühlmittelablauf der B-Seite
- 28: durchgehenden Bohrung
- 29: Eingangszahnrad
- 30: Ausgangszahnrad
- 31: Antriebszahnrad
- 32: Differentialzahnrad
- 33: Öltank
- 34: Ölsumpfbereich
- 35: erster Ölfänger
- 36: zweiter Ölfänger
- 37: Linkslenker-Führungsbereich
- 38: Rechtslenker-Führungsbereich
- 39: Öltankbereich
- 40: Kontakte
- 41: Lager
- 42: Elektromaschinenteilgehäuse
- 43: Getriebeteilgehäuse
- 44: Pulswechselrichterteilgehäuse
- 45: Abschrägung
- 46: Beugungswinkel

## Patentansprüche

1. Kraftfahrzeug mit einem Antriebsstrang (1), wobei der Antriebsstrang (1) mindestens ein Antriebsaggregat (2), mindestens ein Lenkgetriebe (3), mindestens eine Lenkwelle (4) und mindestens eine erste und eine zweite Gelenkwelle (5, 6) aufweist, wobei das Antriebsaggregat (2) eine Elektromaschine (7), eine Getriebeeinheit (8) und einen Pulswechselrichter (9) aufweist, wobei die Elektromaschine (7) und der Pulswechselrichter (9) auf zwei gegenüberliegenden Seiten der Getriebeeinheit (8) angeordnet sind, wobei die Elektromaschine (7) eine Antriebswelle (10) und die Getriebeeinheit (8) mindestens eine Getriebewelle (11) aufweist, wobei die Antriebswelle (10) und die Getriebewelle (11) im Wesentlichen horizontal und im Wesentlichen senkrecht zu einer Fahrtrichtung (12) des Kraftfahrzeugs verlaufen, wobei das Lenkgetriebe (3) in Fahrtrichtung (12) vor dem Antriebsaggregat (2) angeordnet ist, wobei das Lenkgetriebe (3) mittels der Lenkwelle (4) mit einem Lenkrad des Kraftfahrzeugs funktional wirksam verbindbar ist, wobei die Lenkwelle (4) seitlich neben dem Antriebsaggregat (2) angeordnet ist, wobei die Getriebeeinheit (8) weiterhin ein Differential (13) aufweist, wobei das Differential (13) mittels der ersten Gelenkwelle (5) mit einem ersten Vorderrad des Kraftfahrzeuges wirksam verbindbar ist, und wobei das Differential (13) mittels der zweiten Gelenkwelle (6) mit einem zweiten Vorderrad des Kraftfahrzeuges wirksam verbindbar ist, **dadurch gekennzeichnet, dass** das Differential (13) im Wesentlichen mittig auf einer mittig im Kraftfahrzeug verlaufenden Längsachse (14) des Kraftfahrzeugs angeordnet ist, wobei eine Länge der ersten Gelenkwelle (5) einer Länge der zweiten Gelenkwelle (6) im Wesentlichen entspricht, wobei das Antriebsaggregat (2) so ausgebildet ist, dass das Antriebsaggregat (2) sowohl in einem Rechtslenkerfahrzeug wie auch in einem Linkslenkerfahrzeug anordnenbar ist, wobei die Anordnung des Antriebsaggregats (2) im Rechtslenkerfahrzeug gegenüber der Anordnung des Antriebsaggregats (2) im Linkslenkerfahrzeug um 180° zu einer vertikalen Hochachse (15) gedreht ausgeführt ist, wobei wenn das Antriebsaggregat (2) in dem Rechtslenkerfahrzeug angeordnet ist, die Lenkwelle (4) dann in Bezug zur Fahrtrichtung (12) rechts neben dem Antriebsaggregat (2) angeordnet ist, und wobei wenn das Antriebsaggregat (2) in dem Linkslenkerfahrzeug angeordnet ist, die Lenkwelle (4) dann in Bezug zur Fahrtrichtung (12) links neben dem Antriebsaggregat (2) angeordnet ist.

2. Kraftfahrzeug nach dem vorangehenden Anspruch, **dadurch gekennzeichnet, dass** die Elektromaschine (7) sowohl bei einer Anordnung im Rechtslenkerfahrzeug wie auch bei einer Anordnung im Linkslenkerfahrzeug auf einer der Lenkwelle (4) abgewandten Seite der Getriebeeinheit (8) angeordnet ist.

3. Kraftfahrzeug nach einem der vorangehenden Ansprüche, **dadurch gekennzeichnet, dass** das Antriebsaggregat (2) ein Antriebsaggregat-Gehäuse (16) aufweist, wobei an dem Antriebsaggregat-Gehäuse (16) auf einer ersten, A-Seite (17) des Antriebsaggregat-Gehäuses (16) mehrere A-Seiten-Befestigungspunkte (18) ausgebildet sind, wobei an dem Antriebsaggregat-Gehäuse (16) auf einer zweiten, der A-Seite (17) gegenüberliegenden B-Seite (19) des Antriebsaggregat-Gehäuses (16) mehrere B-Seiten-Befestigungspunkte (20) ausgebildet sind, wobei das Antriebsaggregat-Gehäuse (16) mittels zumindest zwei der A-Seiten-Befestigungspunkte (18) an einer vorderen, Front-Einheitskonsole (21) und mittels zumindest zwei der B-Seiten-Befestigungspunkte (20) an einer hinteren Heck-Einheitskonsole (22) befestigbar ist, oder wobei das Antriebsaggregat-Gehäuse (16) mittels zumindest zwei der B-Seiten-Befestigungspunkte (20) an der vorderen, Front-Einheitskonsole (21) und mittels zumindest zwei der A-Seiten-Befestigungspunkte (18) an der hinteren Heck-Einheitskonsole (22) befestigbar ist, und wobei die Front-Einheitskonsole (21) und die Heck-Einheitskonsole (22) an einem Fahrgestell (23) des Kraftfahrzeuges ausgebildet oder mit der Karosserie (23) verbunden sind.

4. Kraftfahrzeug nach dem vorangehenden Anspruch, **dadurch gekennzeichnet, dass** eine Anordnung der A-Seiten-Befestigungspunkte (18) zueinander einer Anordnung der B-Seiten-Befestigungspunkte (20) zueinander entspricht, wobei insbesondere die Anordnung der A-Seiten-Befestigungspunkte (18) zu den B-Seiten-Befestigungspunkten (20) an einer vertikalen, mittig in einer Querrichtung durch das Antriebsaggregat-Gehäuse (16) laufenden Ebene gespiegelt ist.

5. Kraftfahrzeug nach einem der vorangehenden Ansprüche 3 oder 4, **dadurch gekennzeichnet, dass** fünf A-Seiten-Befestigungspunkte (18) und fünf B-Seiten-Befestigungspunkte (20) vorhanden und/oder ausgebildet sind.

6. Kraftfahrzeug nach einem der vorangehenden Ansprüche, **dadurch gekennzeichnet, dass** jeweils ein Kühlmittelzulauf (24) und ein Kühlmittelablauf (25) auf der A-Seite (17) und jeweils ein Kühlmittelzulauf (26) und ein Kühlmittelablauf (27) auf der B-Seite (19) des Antriebsaggregat-Gehäuses (16) angeordnet sind, wobei mittels eines der Kühlmittelzuläufe (24, 26) dem Antriebsaggregat-Gehäuse (16) ein Kühlfluid zuführbar ist, wobei mittels eines der Kühlmittelabläufe (25, 27) ein Kühlfluid aus dem Antriebsaggregat-Gehäuse (16) abführbar ist, wobei entweder der Kühlmittelzulauf (24) und der Kühlmittelablauf (24) der A-Seite (17), oder der Kühlmittelzulauf (25) und der Kühlmittelablauf (25) der B-Seite (19) mittels jeweils eines Stopfens verschlossen und somit außer Funktion gesetzt sind.

7. Kraftfahrzeug nach Anspruch 6, **dadurch gekennzeichnet, dass** der Kühlmittelzulauf (24) der A-Seite (17) und der Kühlmittelzulauf (24) der B-Seite (19) und / oder der Kühlmittelablauf (25) der A-Seite (17) und der Kühlmittelablauf (27) der B-Seite (19) mittels einer durchgehenden Bohrung (28) miteinander verbunden sind, wobei diese Bohrung (28) in Fahrtrichtung (12) verläuft.

8. Kraftfahrzeug nach einem der vorangehenden Ansprüche, **dadurch gekennzeichnet, dass** ein Eingangszahnrad (29) und ein Ausgangszahnrad (30) an der Getriebewelle (11) angeordnet oder ausgebildet sind, wobei an der Antriebswelle (10) ein Antriebszahnrad (31) ausgebildet oder angeordnet ist, wobei das Differential (13) ein Differentialzahnrad (32) aufweist, wobei das Antriebszahnrad (31) und das Eingangszahnrad (29) in Eingriff miteinander stehen, wobei das Ausgangszahnrad (30) und das Differentialzahnrad (32) in Eingriff miteinander stehen, insbesondere wobei das Antriebszahnrad (31), das Eingangszahnrad (29), das Ausgangszahnrad (30) und / oder das Differentialzahnrad (32) eine Schrägverzahnung aufweisen.

9. Kraftfahrzeug nach Anspruch 8, **dadurch gekennzeichnet, dass** in dem Antriebsaggregat-Gehäuse (16) zumindest ein Öltank (33) angeordnet ist, wobei in dem Antriebsaggregat-Gehäuse (16) zumindest ein Ölsumpfbereich (34) ausgebildet ist, wobei das Differentialzahnrad (32) planschend im Ölsumpfbereich (34) angeordnet ist, wobei angrenzend zum Öltank (33) ein erster Ölfänger (35) und ein zweiter Ölfänger (36) angeordnet sind, wobei an dem ersten Ölfänger (35) ein Linkslenker-Führungsbereich (37) und an dem zweiten Ölfänger (36) ein Rechtslenker-Führungsbereich (38) ausgebildet ist, wobei mittels des Linkslenker-Führungsbereichs (37) von dem Differentialzahnrad (32) aus dem Ölsumpfbereich (34) empor geschleudertes Öl dem Öltank (33) bei einer ersten Drehrichtung des Differentialzahnrads (32) zuführbar ist, und wobei mittels des Rechtslenker-Führungsbereichs (38) von dem Differentialzahnrad (32) aus dem Ölsumpfbereich (34) empor geschleudertes Öl dem Öltank (33) bei einer zweiten, zur ersten Drehrichtung entgegengesetzten Drehrichtung des Differentialzahnrads (32) zuführbar ist.

10. Kraftfahrzeug nach Anspruch 9, **dadurch gekennzeichnet, dass** in dem Öltank (33) ein Öltankbereich (39) angeordnet und / oder ausgebildet ist, wobei das Antriebszahnrad (31) planschend in dem Öltankbereich (39) angeordnet ist, wobei mehrere Kontakte (40) in dem Antriebsaggregat-Gehäuse (16) angeordnet sind, wobei mittels der Kontakte (40) elektrische Energie zwischen dem Pulswechselrichter (9) und der Elektromaschine (7) übertragbar ist, und wobei die Kontakte (40) mittels des von dem Antriebszahnrad (31), aus dem Öltankbereich (39) empor geschleuderten Öls kühlbar sind.

11. Kraftfahrzeug nach einem der vorangehenden Ansprüche, **dadurch gekennzeichnet, dass** die Getriebewelle (11) mittels zumindest zweier Lager (41) in dem Antriebsaggregat-Gehäuse (16) gelagert ist, wobei die Lager (41) der Getriebewelle (11) in beiden Drehrichtungen der Getriebewelle (11) eine derartige Anordnung und/oder Dimensionierung aufweisen, so dass die Funktion der beiden Lager (41) für eine in der Auslegung der Lager (41) vorbestimmte Lebensdauer für eine Vorwärtsfahrt des Kraftfahrzeugs sichergestellt ist.

12. Kraftfahrzeug nach einem der vorangehenden Ansprüche 3 bis 11, **dadurch gekennzeichnet, dass** das Antriebsaggregat-Gehäuse (16) mehrteilig ausgeführt ist und ein Elektromaschinenteilgehäuse (42), ein Getriebeteilgehäuse (43) und ein Pulswechselrichterteilgehäuse (44) aufweist, wobei die Elektromaschine (7) in dem Elektromaschinenteilgehäuse (42), die Getriebeeinheit (8) in dem Getriebeteilgehäuse (43) und der Pulswechselrichter (9) in dem Pulswechselrichterteilgehäuse (44) angeordnet ist, wobei an dem Pulswechselrichterteilgehäuse (44) eine Abschrägung (45) ausgebildet ist, wobei eine Achse der Lenkwelle (4) in einem Bereich angrenzend zur Abschrägung (45), insbesondere im Wesentlichen parallel zur Abschrägung (45) angeordnet ist.

13. Kraftfahrzeug nach Anspruch 12, **dadurch gekennzeichnet, dass** die Abschrägung (45) an einer der Getriebeeinheit (8) abgewandten Stirnseite des Pulswechselrichterteilgehäuses (44) ausgebildet ist.

14. Kraftfahrzeug nach einem der vorangehenden Ansprüche 12 oder 13, **dadurch gekennzeichnet, dass** die Abschrägung (45) einen Winkel zu einer senkrecht zur Getriebewelle (11) verlaufenden Ebene aufweist, wobei der Abstand der der Getriebeeinheit (8) abgewandten Stirnseite des Pulswechselrichterteilgehäuses (44) zum Getriebeteilgehäuse (43) in einem oberen Bereich der der Getriebeeinheit (8) abgewandten Stirnseite des Pulswechselrichterteilgehäuses (44) größer ist, als in dem unteren Bereich der der Getriebeeinheit (8) abgewandten Stirnseite des Pulswechselrichterteilgehäuses (44).

15. Kraftfahrzeug nach einem der vorangehenden Ansprüche, **dadurch gekennzeichnet, dass** die erste Gelenkwelle (5) und die zweite Gelenkwelle (6) jeweils in einem Beugungswinkel (46) zu einer horizontalen Ebene angeordnet sind, wobei die Beugungswinkel (46) der ersten Gelenkwelle (5) und der zweiten Gelenkwelle (6) im Wesentlichen gleiche Werte aufweisen, insbesondere wobei die Beugungswinkel (46) der ersten Gelenkwelle (5) und der zweiten Gelenkwelle (6) kleiner als 7,5° sind.

## Claims

1. Motor vehicle comprising a drive train (1), the drive train (1) having at least one drive unit (2), at least one steering gear (3), at least one steering shaft (4) and at least one first and one second universal-joint shaft (5, 6), the drive unit (2) having an electric machine (7), a transmission unit (8) and a pulse inverter (9), the electric machine (7) and the pulse inverter (9) being arranged on two opposite sides of the transmission unit (8), the electric machine (7) having a drive shaft (10) and the transmission unit (8) having at least one transmission shaft (11), the drive shaft (10) and the transmission shaft (11) running substantially horizontally and substantially perpendicularly to a direction of travel (12) of the motor vehicle, the steering gear (3) being arranged upstream of the drive unit (2) in the direction of travel (12), the steering gear (3) being functionally operatively connectable to a steering wheel of the motor vehicle by means of the steering shaft (4), the steering shaft (4) being arranged laterally next to the drive unit (2), the transmission unit (8) further having a differential (13), the differential (13) being operatively connectable to a first front wheel of the motor vehicle by means of the first universal-joint shaft (5), and the differential (13) being operatively connectable to a second front wheel of the motor vehicle by means of the second universal-joint shaft (6), **characterized in that** the differential (13) is arranged substantially centrally on a longitudinal axis (14) of the motor vehicle running centrally in the motor vehicle, a length of the first universal-joint shaft (5) substantially corresponding to a length of the second universal-joint shaft (6), the drive unit (2) being designed such that the drive unit (2) can be arranged both in a right-hand drive vehicle and in a left-hand drive vehicle, the arrangement of the drive unit (2) in the right-hand drive vehicle being rotated by 180° to a vertical axis (15) compared to the arrangement of the drive unit (2) in the left-hand drive vehicle, the steering shaft (4) being arranged to the right of the drive unit (2) in relation to the direction of travel (12) when the drive unit (2) is arranged in the right-hand drive vehicle, and the steering shaft (4) being arranged to the left of the drive unit (2) in relation to the direction of travel (12) when the drive unit (2) is arranged in the left-hand drive vehicle.

2. Motor vehicle according to the preceding claim, **characterized in that** the electric machine (7) is arranged on a side of the transmission unit (8) facing away from the steering shaft (4) both in an arrangement in a right-hand drive vehicle and in an arrangement in a left-hand drive vehicle.

3. Motor vehicle according to either of the preceding claims,
**characterized in that** the drive unit (2) has a drive unit housing (16), a plurality of A-side fastening points (18) being formed on the drive unit housing (16) on a first, A side (17) of the drive unit housing (16), a plurality of B-side fastening points (20) being formed on the drive unit housing (16) on a second, B side (19) of the drive unit housing (16) opposite the A side (17), the drive unit housing (16) being fixable to a front-side front unit console (21) by means of at least two of the A-side fastening points (18) and to a rear-side rear unit console (22) by means of at least two of the B-side fastening points (20), or the drive unit housing (16) being fixable to a front-side front unit console (21) by means of at least two of the B-side fastening points (20) and to the rear-side rear unit console (22) by means of at least two of the A-side fastening points (18), and the front unit console (21) and the rear unit console (22) being formed on a chassis (23) of the motor vehicle or being connected to the body (23).

4. Motor vehicle according to the preceding claim, **characterized in that** an arrangement of the A-side fastening points (18) relative to one another corresponds to an arrangement of the B-side fastening points (20) relative to one another, in particular the arrangement of the A-side fastening points (18) relative to the B-side fastening points (20) being mirrored on a vertical plane running centrally in a transverse direction through the drive unit housing (16).

5. Motor vehicle according to either of the preceding claims 3 or 4,
**characterized in that** five A-side fastening points (18) and five B-side fastening points (20) are present and/or formed.

6. Motor vehicle according to any of the preceding claims,
**characterized in that** a coolant inlet (24) and a coolant outlet (25) are arranged on the A side (17) and a coolant inlet (26) and a coolant outlet (27) are arranged on the B side (19) of the drive unit housing (16), a cooling fluid being suppliable to the drive unit housing (16) by means of one of the coolant inlets (24, 26), a cooling fluid being dischargeable from the drive unit housing (16) by means of one of the coolant outlets (25, 27), either the coolant inlet (24) and the coolant outlet (24) of the A side (17) or the coolant inlet (25) and the coolant outlet (25) of the B side (19) being closed in each case by means of a plug and thus rendered inoperative.

7. Motor vehicle according to claim 6, **characterized in that** the coolant inlet (24) of the A side (17) and the coolant inlet (24) of the B side (19) and/or the coolant outlet (25) of the A side (17) and the coolant outlet (27) of the B side (19) are connected to one another by means of a through bore (28), said bore (28) running in the direction of travel (12).

8. Motor vehicle according to any of the preceding claims,
**characterized in that** an input gear (29) and an output gear (30) are arranged or formed on the transmission shaft (11), a drive gear (31) being formed or arranged on the drive shaft (10), the differential (13) having a differential gear (32), the drive gear (31) and the input gear (29) being in engagement with one another, the output gear (30) and the differential gear (32) being in engagement with one another, in particular the drive gear (31), the input gear (29), the output gear (30) and/or the differential gear (32) having helical teeth.

9. Motor vehicle according to claim 8, **characterized in that** at least one oil tank (33) is arranged in the drive unit housing (16), at least one oil sump region (34) being formed in the drive unit housing (16), the differential gear (32) being arranged in a splashing manner in the oil sump region (34), a first oil catcher (35) and a second oil catcher (36) being arranged adjacent to the oil tank (33), a left-hand drive guide region (37) being formed on the first oil catcher (35) and a right-hand drive guide region (38) being formed on the second oil catcher (36), oil thrown up by the differential gear (32) from the oil sump region (34) being suppliable by means of the left-hand drive guide region (37) to the oil tank (33) in a first direction of rotation of the differential gear (32), and oil thrown up by the differential gear (32) from the oil sump region (34) being suppliable by means of the right-hand drive guide region (38) to the oil tank (33) in a second direction of rotation of the differential gear (32) opposite to the first direction of rotation.

10. Motor vehicle according to claim 9, **characterized in that** an oil tank region (39) is arranged and/or formed in the oil tank (33), the drive gear (31) being arranged in a splashing manner in the oil tank region (39), a plurality of contacts (40) being arranged in the drive unit housing (16), electrical energy being transmittable between the pulse inverter (9) and the electric machine (7) by means of the contacts (40), and the contacts (40) being able to be cooled by means of the oil thrown up from the oil tank region (39) by the drive gear (31).

11. Motor vehicle according to any of the preceding claims,
**characterized in that** the transmission shaft (11) is mounted in the drive unit housing (16) by means of at least two bearings (41), the bearings (41) of the transmission shaft (11) having, in both directions of rotation of the transmission shaft (11), such an arrangement and/or dimensions that the function of the two bearings (41) is ensured for a service life predetermined in the design of the bearings (41) for forward travel of the motor vehicle.

12. Motor vehicle according to any of the preceding claims 3 to 11,
**characterized in that** the drive unit housing (16) is designed in a plurality of parts and has an electric machine sub-housing (42), a transmission sub-housing (43) and a pulse inverter sub-housing (44), the electric machine (7) being arranged in the electric machine sub-housing (42), the transmission unit (8) in the transmission sub-housing (43) and the pulse inverter (9) in the pulse inverter sub-housing (44), a bevel (45) being formed on the pulse inverter sub-housing (44), an axis of the steering shaft (4) being arranged in a region adjacent to the bevel (45), in particular substantially parallel to the bevel (45).

13. Motor vehicle according to claim 12, **characterized in that** the bevel (45) is formed on a front side of the pulse inverter sub-housing (44) facing away from the transmission unit (8).

14. Motor vehicle according to either of the preceding claims 12 or 13,
**characterized in that** the bevel (45) has an angle to a plane running perpendicularly to the gear shaft (11), the distance of the front side of the pulse inverter sub-housing (44) facing away from the gear unit (8) to the gear sub-housing (43) being greater in an upper region of the front side of the pulse inverter sub-housing (44) facing away from the gear unit (8) than in the lower region of the front side of the pulse inverter sub-housing (44) facing away from the gear unit (8).

15. Motor vehicle according to any of the preceding claims,
**characterized in that** the first universal-joint shaft (5) and the second universal-joint shaft (6) are each arranged at a bending angle (46) to a horizontal plane, the bending angles (46) of the first universal-joint shaft (5) and the second universal-joint shaft (6) having substantially equal values, in particular the bending angles (46) of the first universal-joint shaft (5) and the second universal-joint shaft (6) being less than 7.5°.

## Revendications

1. Véhicule automobile comportant une chaîne cinématique (1), dans lequel la chaîne cinématique (1) présente au moins un groupe moteur (2), au moins un mécanisme de direction (3), au moins un arbre de direction (4) et au moins un premier et un second arbre de transmission (5, 6), dans lequel le groupe moteur (2) présente une machine électrique (7), une unité de transmission (8) et un onduleur à impulsions (9), dans lequel la machine électrique (7) et l'onduleur à impulsions (9) sont agencés sur deux côtés opposés de l'unité de transmission (8), dans lequel la machine électrique (7) présente un arbre d'entraînement (10) et l'unité de transmission (8) au moins un arbre de transmission (11), dans lequel l'arbre d'entraînement (10) et l'arbre de transmission (11) s'étendent sensiblement horizontalement et sensiblement perpendiculairement à une direction de déplacement (12) du véhicule automobile, dans lequel le mécanisme de direction (3) est agencé devant le groupe moteur (2) dans la direction de déplacement (12), dans lequel le mécanisme de direction (3) peut être relié de manière fonctionnellement active à un volant de direction du véhicule automobile au moyen de l'arbre de direction (4), dans lequel l'arbre de direction (4) est agencé latéralement à côté du groupe moteur (2), dans lequel l'unité de transmission (8) présente en outre un différentiel (13), dans lequel le différentiel (13) peut être relié de manière active à une première roue avant du véhicule automobile au moyen du premier arbre de transmission (5), et dans lequel le différentiel (13) peut être relié de manière active à une seconde roue avant du véhicule automobile au moyen du second arbre de transmission (6), **caractérisé en ce que** le différentiel (13) est agencé sensiblement au centre sur un axe longitudinal (14) du véhicule automobile s'étendant au centre du véhicule automobile, dans lequel une longueur du premier arbre de transmission (5) correspond sensiblement à une longueur du second arbre de transmission (6), dans lequel le groupe moteur (2) est conçu de telle sorte que le groupe moteur (2) peut être agencé aussi bien dans un véhicule à conduite à droite que dans un véhicule à conduite à gauche, dans lequel l'agencement du groupe moteur (2) dans le véhicule à conduite à droite est réalisé en étant tourné de 180 ° par rapport à un axe haut vertical (15) par rapport à l'agencement du groupe moteur (2) dans le véhicule à conduite à gauche, dans lequel lorsque le groupe moteur (2) est agencé dans le véhicule à conduite à droite, l'arbre de direction (4) est alors agencé à droite à côté du groupe moteur (2) par rapport à la direction de déplacement (12), et dans lequel lorsque le groupe moteur (2) est agencé dans le véhicule à conduite à gauche, l'arbre de direction (4) est alors agencé à gauche à côté du groupe moteur (2) par rapport à la direction de déplacement (12).

2. Véhicule automobile selon la revendication précédente,
**caractérisé en ce que** la machine électrique (7) est agencée sur un côté de l'unité de transmission (8) opposé à l'arbre de direction (4), aussi bien dans le cas d'un agencement dans le véhicule à conduite à droite que dans le cas d'un agencement dans le véhicule à conduite à gauche.

3. Véhicule automobile selon l'une des revendications précédentes,
**caractérisé en ce que** le groupe moteur (2) présente un boîtier (16) de groupe moteur, dans lequel plusieurs points de fixation (18) de côté A sont réalisés sur le boîtier (16) de groupe moteur sur un premier côté A (17) du boîtier (16) de groupe moteur, dans lequel plusieurs points de fixation (20) de côté B sont réalisés sur le boîtier (16) de groupe moteur sur un second côté B (19) du boîtier (16) de groupe moteur opposé au côté A (17), dans lequel le boîtier (16) de groupe moteur peut être fixé au moyen d'au moins deux des points de fixation (18) de côté A à une console d'unité frontale (21) avant et au moyen d'au moins deux des points de fixation (20) de côté B à une console d'unité de queue (22) arrière, ou dans lequel le boîtier (16) de groupe moteur peut être fixé au moyen d'au moins deux des points de fixation (20) de côté B à la console d'unité frontale (21) avant et au moyen d'au moins deux des points de fixation (18) de côté A à la console d'unité de queue (22) arrière, et dans lequel la console d'unité frontale (21) et la console d'unité de queue (22) sont réalisées sur un châssis (23) du véhicule automobile ou sont reliées à la carrosserie (23).

4. Véhicule automobile selon la revendication précédente, **caractérisé en ce qu'un** agencement des points de fixation (18) de côté A les uns par rapport aux autres correspond à un agencement des points de fixation (20) de côté B les uns par rapport aux autres, dans lequel l'agencement des points de fixation (18) de côté A par rapport aux points de fixation (20) de côté B est en particulier reflété sur un plan vertical passant au centre dans une direction transversale à travers le boîtier (16) de groupe moteur.

5. Véhicule automobile selon l'une des revendications précédentes 3 ou 4,
**caractérisé en ce que** cinq points de fixation (18) de côté A et cinq points de fixation (20) de côté B sont présents et/ou réalisés.

6. Véhicule automobile selon l'une des revendications précédentes,
**caractérisé en ce que** respectivement une arrivée (24) de fluide de refroidissement et une évacuation (25) de fluide de refroidissement sont agencées sur le côté A (17) et respectivement une arrivée (26) de fluide de refroidissement et une évacuation (27) de fluide de refroidissement sont agencées sur le côté B (19) du boîtier (16) de groupe moteur, dans lequel un fluide de refroidissement peut être amené au boîtier (16) de groupe moteur au moyen d'une des arrivées (24, 26) de fluide de refroidissement, dans lequel un fluide de refroidissement peut être évacué du boîtier (16) de groupe moteur au moyen d'une des évacuations (25, 27) de fluide de refroidissement, dans lequel soit l'arrivée (24) de fluide de refroidissement et l'évacuation (24) de fluide de refroidissement du côté A (17), soit l'arrivée (25) de fluide de refroidissement et l'évacuation (25) de fluide de refroidissement du côté B (19) sont fermées au moyen d'un bouchon respectif et sont ainsi mises hors fonction.

7. Véhicule automobile selon la revendication 6, **caractérisé en ce que** l'arrivée (24) de liquide de refroidissement du côté A (17) et l'arrivée (24) de liquide de refroidissement du côté B (19) et/ou l'évacuation (25) de liquide de refroidissement du côté A (17) et l'évacuation (27) de liquide de refroidissement du côté B (19) sont reliées entre elles au moyen d'un alésage (28) traversant, dans lequel ledit alésage (28) s'étend dans la direction de déplacement (12).

8. Véhicule automobile selon l'une des revendications précédentes,
**caractérisé en ce qu**'une roue dentée d'entrée (29) et une roue dentée de sortie (30) sont agencées ou réalisées sur l'arbre de transmission (11), dans lequel une roue dentée d'entraînement (31) est réalisée ou agencée sur l'arbre d'entraînement (10), dans lequel le différentiel (13) présente une roue dentée de différentiel (32), dans lequel la roue dentée d'entraînement (31) et la roue dentée d'entrée (29) sont en prise l'une avec l'autre, dans lequel la roue dentée de sortie (30) et la roue dentée de différentiel (32) sont en prise l'une avec l'autre, en particulier dans lequel la roue dentée d'entraînement (31), la roue dentée d'entrée (29), la roue dentée de sortie (30) et/ou la roue dentée de différentiel (32) présentent une denture oblique.

9. Véhicule automobile selon la revendication 8, **caractérisé en ce q**u'au moins un réservoir d'huile (33) est agencé dans le boîtier (16) de groupe moteur, dans lequel au moins une zone de carter d'huile (34) est réalisée dans le boîtier (16) de groupe moteur, dans lequel la roue dentée de différentiel (32) est agencée de manière à patauger dans la zone de carter d'huile (34), dans lequel un premier collecteur d'huile (35) et un second collecteur d'huile (36) sont agencés de manière adjacente au réservoir d'huile (33), dans lequel une zone de guidage de conduite à gauche (37) est réalisée sur le premier collecteur d'huile (35) et une zone de guidage de conduite à droite (38) est réalisée sur le second collecteur d'huile (36), dans lequel l'huile projetée par la roue dentée de différentiel (32) hors de la zone de carter d'huile (34) peut être amenée au réservoir d'huile (33) dans un premier sens de rotation de la roue dentée de différentiel (32) au moyen de la zone de guidage de conduite à gauche (37), et dans lequel l'huile projetée par la roue dentée de différentiel (32) hors de la zone de carter d'huile (34) au moyen de la zone de guidage de conduite à droite (38) peut être amenée au réservoir d'huile (33) dans un second sens de rotation de la roue dentée de différentiel (32) opposé au premier sens de rotation.

10. Véhicule automobile selon la revendication 9, **caractérisé en ce qu**'une zone de réservoir d'huile (39) est agencée et/ou réalisée dans le réservoir d'huile (33), dans lequel la roue dentée d'entraînement (31) est agencée de manière à patauger dans la zone de réservoir d'huile (39), dans lequel plusieurs contacts (40) sont agencés dans le boîtier (16) de groupe moteur, dans lequel l'énergie électrique peut être transmise entre l'onduleur à impulsions (9) et la machine électrique (7) au moyen des contacts (40), et dans lequel les contacts (40) peuvent être refroidis au moyen de l'huile projetée par la roue dentée d'entraînement (31) hors de la zone de réservoir d'huile (39).

11. Véhicule automobile selon l'une des revendications précédentes,
**caractérisé en ce que** l'arbre de transmission (11) est monté dans le boîtier (16) de groupe moteur au moyen d'au moins deux paliers (41), dans lequel les paliers (41) de l'arbre de transmission (11) présentent, dans les deux sens de rotation de l'arbre de transmission (11), un agencement et/ou un dimensionnement tels que le fonctionnement des deux paliers (41) est assuré pour une durée de vie prédéterminée dans la conception des paliers (41) pour une marche avant du véhicule automobile.

12. Véhicule automobile selon l'une des revendications précédentes 3 à 11,
**caractérisé en ce que** le boîtier (16) de groupe moteur est conçu en plusieurs parties et présente un boîtier partiel (42) de machine électrique, un boîtier partiel (43) de transmission et un boîtier partiel (44) d'onduleur à impulsions, dans lequel la machine électrique (7) est agencée dans le boîtier partiel (42) de machine électrique, l'unité de transmission (8) dans le boîtier partiel (43) de transmission et l'onduleur à impulsions (9) dans le boîtier partiel (44) d'onduleur à impulsions, dans lequel un chanfrein (45) est réalisé sur le boîtier partiel (44) d'onduleur à impulsions, dans lequel un axe de l'arbre de direction (4) est agencé dans une zone adjacente au chanfrein (45), en particulier sensiblement parallèle au chanfrein (45).

13. Véhicule automobile selon la revendication 12, **caractérisé en ce que** le chanfrein (45) est réalisé sur une face frontale du boîtier partiel (44) d'onduleur à impulsions, opposée à l'unité de transmission (8).

14. Véhicule automobile selon l'une des revendications précédentes 12 ou 13, **caractérisé en ce que** le chanfrein (45) présente un angle par rapport à un plan perpendiculaire à l'arbre de transmission (11), dans lequel la distance entre la face frontale du boîtier partiel (44) d'onduleur à impulsions, opposée à l'unité de transmission (8), et le boîtier partiel (43) de transmission est supérieure dans une zone supérieure de la face frontale de boîtier partiel (44) d'onduleur à impulsions, opposée à l'unité de transmission (8), que dans la zone inférieure de la face frontale du boîtier partiel (44) d'onduleur à impulsions, opposée à l'unité de transmission (8).

15. Véhicule automobile selon l'une des revendications précédentes,
**caractérisé en ce que** le premier arbre de transmission (5) et le second arbre de transmission (6) sont agencés respectivement selon un angle de courbure (46) par rapport à un plan horizontal, dans lequel les angles de courbure (46) du premier arbre de transmission (5) et du second arbre de transmission (6) présentent des valeurs sensiblement égales, en particulier dans lequel les angles de courbure (46) du premier arbre de transmission (5) et du second arbre de transmission (6) sont inférieurs à 7,5 °.
